(19) Europäisches Patentamt
European Patent Office
Office européen des brevets

(11) **EP 4 391 106 A1**

(12) **EUROPEAN PATENT APPLICATION**

(43) Date of publication:
**26.06.2024 Bulletin 2024/26**

(21) Application number: **23212406.5**

(22) Date of filing: **27.11.2023**

(51) International Patent Classification (IPC):
*H01M 4/131* (2010.01)     *H01M 4/133* (2010.01)
*H01M 4/136* (2010.01)     *H01M 4/36* (2006.01)
*H01M 4/505* (2010.01)     *H01M 4/525* (2010.01)
*H01M 4/58* (2010.01)      *H01M 4/587* (2010.01)
*H01M 4/62* (2006.01)      *H01M 10/0525* (2010.01)

(52) Cooperative Patent Classification (CPC):
**H01M 10/0525; H01M 4/131; H01M 4/133;
H01M 4/136; H01M 4/364; H01M 4/366;
H01M 4/505; H01M 4/525; H01M 4/582;
H01M 4/587; H01M 4/622; H01M 4/625**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 KR 20220178527**

(71) Applicant: **Samsung SDI Co., Ltd.
Gyeonggi-do 17084 (KR)**

(72) Inventors:
• **Son, Inhyuk
17084 Yongin-si, Gyeonggi-do (KR)**

• **Kapylou, Andrei
17084 Yongin-si, Gyeonggi-do (KR)**
• **Mah, Sangkook
17084 Yongin-si, Gyeonggi-do (KR)**
• **Jo, Sungnim
17084 Yongin-si, Gyeonggi-do (KR)**
• **Shim, Kyueun
17084 Yongin-si, Gyeonggi-do (KR)**

(74) Representative: **Michalski Hüttermann & Partner
Patentanwälte mbB
Kaistraße 16A
40221 Düsseldorf (DE)**

(54) **COMPOSITE CATHODE ACTIVE MATERIAL, CATHODE AND LITHIUM BATTERY CONTAINING COMPOSITE CATHODE ACTIVE MATERIAL AND PREPARATION METHOD THEREOF**

(57)     A composite cathode active material, a method of preparing the composite cathode active material, and a cathode and a lithium battery each including the composite cathode active material are provided. The composite cathode active material includes a core including a lithium transition metal oxide and a shell on the surface of the core, wherein the shell comprises a conductive carbon-based composite including a first metal oxide represented by formula $M_aO_b$ ($0<a\leq3$, $0<b<4$, wherein a is 1, 2, or 3, and b is not an integer) and a carbonaceous material, and a lithium fluoride-based compound, wherein the first metal oxide is within a matrix of the carbonaceous material, and M is one or more metals selected from among Group 2 to Group 13, Group 15, and Group 16 of the Periodic Table.

FIG. 7

**Description**

**CROSS-REFERENCE TO RELATED APPLICATION**

The present application claims priority to and the benefit of Korean Patent Application No. 10-2022-0178527, filed on December 19, 2022, in the Korean Intellectual Property Office, the entire content of which is hereby incorporated by reference.

**BACKGROUND**

**1. Field**

One or more embodiments relate to a composite cathode active material, and for example, to a cathode and lithium battery containing the composite cathode active material, and a method of fabrication thereof.

**2. Description of the Related Art**

To meet the desire/demand for size reduction and high performance of various devices that utilize lithium batteries, increasing the energy density of lithium batteries has become important, in addition to miniaturization and weight reduction. In other words, high-capacity lithium batteries are becoming important.
In order to implement lithium batteries that meet the above-described purposes, cathode active materials with high-capacity are being reviewed.
Nickel-based cathode active materials in the art can have deteriorated lifetime characteristics and poor thermal stability due to side reactions.
Therefore, methods capable of preventing or reducing the deterioration of battery performance while incorporating nickel-based cathode active materials are desired and/or required.

**SUMMARY**

Aspects of one or more embodiments of the present disclosure relate to a novel composite cathode active material capable of preventing or reducing deterioration of lithium performance by suppressing or reducing side reactions of the composite cathode active material and improving the reversibility of electrode reactions.
Aspects of one or more embodiments relate to a cathode including the composite cathode active material.
Aspects of one or more embodiments relate to a lithium battery employing the cathode.
Aspects of one or more embodiments relate to a method of preparing the composite cathode active material.
Additional aspects will be set forth in part in the description which follows and, in part, will be apparent from the description, or may be learned by practice of the presented embodiments of the disclosure.
According to one or more embodiments, a composite cathode active material includes a core including a lithium transition metal oxide, and a shell located over (e.g., on) a surface of the core, and the shell includes a conductive carbon-based composite including a first metal oxide represented by formula $M_aO_b$ ($0<a\leq3$, $0<b<4$, where a is 1, 2, or 3, and b is not an integer) and a carbonaceous material, and a lithium fluoride-based compound, the first metal oxide is within a matrix of a carbonaceous material, and M is one or more metals selected from among Group 2 to Group 13, Group 15, and Group 16 of the Periodic Table.
According to one or more embodiments, a cathode includes the composite cathode active material.
According to one or more embodiments, a lithium battery includes a cathode, an anode, and an electrolyte between the cathode and anode.
According to one or more embodiments, a method of preparing the composite cathode active material includes supplying a lithium transition metal oxide; supplying a composite; and mechanically milling the lithium transition metal oxide, the composite and a hexafluorophosphate, wherein the composite includes a first metal oxide represented by formula $M_aO_b$ ($0<a\leq3$, $0<b<4$, where a is 1, 2, or 3, and b is not an integer), and a carbonaceous material. The first metal oxide is within a matrix of the carbonaceous material, and M is one or more metals selected from among Group 2 to Group 13, Group 15, and Group 16 of the Periodic Table.

**BRIEF DESCRIPTION OF THE DRAWINGS**

The above and other aspects, features, and/or principles of certain embodiments of the present disclosure will be more apparent from the following description taken in conjunction with the accompanying drawings, in which:

FIG. 1 is a graph showing an X-ray photoelectron spectroscopy (XPS) analysis spectra for C1s, O1s, Li1s, and Ni2p for a composite cathode active material prepared in Example 3, Comparative Example 1 and Comparative Example 2, and a bare NCA of Comparative Example 5.

FIG. 2 is a graph showing the XPS analysis spectrum for Li1s of FIG. 1.

FIG. 3 is a graph showing a possible deconvolution of the Li1s signal of the bare NCA of Example 5 of FIG. 2.

FIG. 4 is a graph showing an XPS analysis spectrum of F1s of FIG. 1.

FIG. 5 is a graph showing a possible deconvolution of the F1s signal of a composite cathode active material of Example 3 of FIG. 4.

FIG. 6 is a graph showing the capacity retention characteristics of the lithium cells fabricated in Example 4 to Example 6, Comparative Example 6, and Comparative Example 10.

FIG. 7 shows a schematic diagram of a lithium battery according to one or more embodiments of the present disclosure.

FIG. 8 shows a schematic diagram of a lithium battery according to one or more embodiments of the present disclosure.

FIG. 9 shows a schematic diagram of a lithium battery according to one or more embodiments of the present disclosure.

## DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below, by referring to the drawings, to explain aspects of the present description. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

The present disclosure described below is subject to various modifications and may have several embodiments, certain of which are illustrated in the drawings and described in more detail in the following description. However, this is not intended to limit the present disclosure to any particular embodiment and is to be understood to include all modifications, equivalents, or substitutions that fall within the technical scope of the present disclosure.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. As used herein, the terms "comprises," "comprising," "includes," "including," "has, " "having" and/or the like, when used in this specification, are intended to indicate the presence of the recited features, numbers, steps, actions, components, parts, ingredients, materials, or a combination thereof, and are not to be understood as precluding the possibility of the presence or addition of one or more other features, numbers, steps, actions, components, parts, ingredients, materials, or a combination thereof. As used herein, "/" may be construed as "and" or "or" depending on the context.

In the drawings, thicknesses are shown to scale for the purpose of clarity of representation of various layers and areas. Throughout the specification, similar parts are designated by the same drawing symbols.

Throughout the specification, when a layer, membrane, region, plate, or other part is referred to as being "on," "connected to," or "above" another part, it can be directly on, connected to, or above to the other part, or one or more intervening elements or layers may be present. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In the present disclosure, when particles are spherical, "diameter" indicates a particle diameter or an average particle diameter, and when the particles are non-spherical, the "diameter" indicates a major axis length or an average major axis length. In the present disclosure, an "average particle diameter" of particles indicates an average diameter of spherical particles or an average length of major axes of non-spherical particles. Average particle diameters of particles may be measured using a particle size analyzer (PSA). The average particle diameter is, for example, a median particle diameter D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size, for example, by laser diffraction method.

In the present disclosure, the term "metal" includes metals and metalloids such as silicon and germanium in an elemental or ionic state.

In the present disclosure, the term "alloy" refers to a mixture of two or more metals.

In the present disclosure, the term "cathode active material" refers to a material for cathodes allowing lithiation and delithiation.

In the present disclosure, the term "anode active material" refers to a material for anodes allowing lithiation and delithiation.

In the present disclosure, the terms "lithiation" and "lithiating" refer to a process of adding lithium to a cathode active material or an anode active material.

In the present disclosure, the terms "delithiation" and "delithiating" refer to a process of removing lithium from a cathode active material or an anode active material.

In the present disclosure, the terms "charging" and "charge" refer to a process of supplying electrochemical energy to a battery.

In the present disclosure, the terms "discharging" and "discharge" refer to a process of removing electrochemical energy from a battery.

In the present disclosure, the terms "cathode" and "positive electrode" refer to an electrode in which electrochemical reduction and lithiation occur during discharging.

In the disclosure, the terms "anode" and "negative electrode" refer to an electrode in which electrochemical oxidation and delithiation occur during discharging.

The following describes in more detail a composite cathode active material, a cathode and lithium battery including the composite cathode active material according to example embodiments, and a method of fabrication thereof.

The composite cathode active material includes, a core including a lithium transition metal oxide; and a shell located over the surface of the core; the shell containing a conductive carbon-based composite including one or more types (kinds) of a first metal oxide represented by formula $M_aO_b$ ($0<a\leq3$, $0<b<4$, when a is 1, 2, or 3, b is not an integer); and a carbonaceous material; and a lithium fluoride-based compound, wherein the first metal oxide is located within a matrix of a carbonaceous material; wherein the M is one or more metals of (e.g., one or more metals selected from) Group 2 to Group 13, Group 15, and/or Group 16 of the Periodic Table (i.e., the Periodic Table of Elements).

In $M_aO_b$, $1\leq a\leq3$, $0<b<3$, $1\leq a\leq2$, $0<b<3$, $1\leq a\leq2$, $0<b<2.5$, $1\leq a\leq2$, $0<b<2$, or $1\leq a\leq2$, $0<b<1$, when a is 1, or 2, b is not an integer.

The following is a description of the basis for the superior effectiveness of a composite cathode active material according to one or more embodiments, which is intended to provide a better understanding of the present disclosure and is not intended to limit the present disclosure in any way.

A shell containing a conductive carbon-based composite including a first metal oxide and a carbonaceous material, and a lithium fluoride-based compound is disposed on a core of the composite cathode active material. The lithium fluoride-based compound of the shell forms a chemical bond with the carbonaceous material and/or the first metal oxide included in the shell. The lithium fluoride-based compound contained in the shell increases the conduction of ions in the composite cathode active material. The fluorine (F) atom in the lithium fluoride-based compound has a lower electronegativity compared to the carbon (C) atom, which increases the electrochemical reactivity and electrical conductivity. Therefore, in a shell including a carbonaceous material as the main component, for example, the C-F bond of the carbonaceous material and the fluorine atom facilitate the conduction of electrons and ions. Therefore, it may facilitate the electrochemical absorption and release of high-density energy from the composite cathode active material. For example, the inclusion of fluorine (F) elements in the shell may increase the density of charge carriers as electrons from the fluorine (F) elements are added to for example, the $\pi$-electron system of, a carbonaceous material. Therefore, the inclusion of fluorine (F) elements in the shell may increase the reversibility of the electrode reaction at the surface of the composite cathode active material and increase the conductivity of the electrode. As a result, the cycle characteristics and charge and discharge capacity of a battery including such a composite cathode active material may be improved.

In one or more embodiments, the shell contains a lithium fluoride-based compound, wherein the lithium fluoride-based compound is LiF, $LiPF_6$, the fluorophosphate intermediates $Li_xPF_yO_z$ ($1 \leq x \leq 3$, $0 < y \leq 2$, $2 \leq z < 4$), or a combination thereof. Herein, starting material $LiPF_6$ is decomposed into LiF and $PF_3$, which react with water to form $PF_3O$ and $Li^+$, which are converted to $Li_xPF_yO_z$ ($1 \leq x \leq 3$, $0 < y \leq 2$, $2 \leq z < 4$) and LiF. In one or more embodiments, the starting material $LiPF_6$ may be decomposed into LiF and $PF_3$, which may be converted to LiF by reacting with water.

In $Li_xPF_yO_z$, $1 \leq x < 3$, $0 < y \leq 2$, $2 \leq z < 3$, or $1 \leq x \leq 3$, $0 < y \leq 1$, $2 \leq z < 2$.or $1 \leq x \leq 2$, $0 < y \leq 1$, $2 \leq z < 2$. , In the $Li_xPF_yO_z$, when present as a mixture of $LiPF_2O_2$, $Li_2PFO_3$, and $Li_3PO_4$, x ($1 \leq x < 3$), y ($0 < y \leq 2$), and z ($2 \leq z < 4$) may take any value.

LiF, and $Li_xPF_yO_z$ ($1 \leq x \leq 3$, $0 < y \leq 2$, $2 \leq z < 4$) are formed by the decomposition of $LiPF_6$ in a physicochemical reaction due to frictional energy generated during mixing with graphene balls, and the addition of such components may result in improved ionic conductivity. As a result, it is possible to prepare a composite cathode active material with improved high-rate characteristics and capacity retention.

The main effect of $LiPF_6$ is to reduce the formation of cathode side reactions and improve the lifetime of the overvoltage cathode by forming a more robust SEI film in a small amount, and the effect is maximized or increased with a small amount because the amount of $LiPF_6$ utilized is limited due to the decrease in rate characteristics due to the increase in viscosity when the content (e.g., amount) of $LiPF_6$ in the electrolyte increases and due to the decrease in low temperature characteristics, *etc*.

The content (e.g., amount) of the lithium fluoride-based compound in the shell is 3 wt% or less, 2 wt% or less, 1 wt% or less, 0.1 wt% to 1 wt%, 0.1 wt% to 0.5 wt%, or 0.1 wt% to 0.3 wt%, based on 100 wt% (e.g., the total weight) of the composite cathode active material. When the content (e.g., amount) of the lithium fluoride-based compound is in the above ranges, a composite cathode active material having excellent or suitable high-rate characteristics may be obtained by improving the ionic conductivity without deteriorating the weight and volume energy density of the battery or deteriorating the rate characteristics and lifetime due to the problem of deteriorating the electronic conductivity.

Carbonaceous materials in the art are easily agglomerated, making it difficult to apply a substantially uniform coating on the core. In contrast, the composite cathode active material may be a matrix of a carbonaceous material, and a substantially uniform shell may be disposed on the core while preventing or reducing aggregation of the carbonaceous material by utilizing a composite including a plurality of first metal oxides arranged therein. Therefore, by effectively blocking the contact between the core and the electrolyte, side reactions caused by the contact between the core and the electrolyte are prevented or reduced. In one or more embodiments, cation mixing by the electrolyte is suppressed or reduced, thereby suppressing or reducing the formation of a resistive layer. In one or more embodiments, elution of transition metal ions is also suppressed or reduced. The carbonaceous material may be, for example, a crystalline carbonaceous material. The carbonaceous material may have, for example, a carbon-based nanostructure. The carbonaceous material may have, for example, a carbon-based two-dimensional nanostructure. The carbonaceous material may be, for an example, graphene. In this case, a shell including graphene and/or a matrix thereof is flexible and may easily accommodate volume changes in the composite cathode active material during charge and discharge, thereby suppressing or reducing cracking within the composite cathode active material. Because graphene has high electronic conductivity, interfacial resistance between the composite cathode active material and the electrolyte may be reduced. Therefore, the internal resistance of a lithium battery may be maintained or reduced despite the introduction of a shell including graphene.

In a shell including a carbonaceous material as a main component in the composite cathode active material according to one or more embodiments, chemical bonding of the carbonaceous material with a lithium fluoride-based compound, for example, facilitates the conduction of electrons and ions. In one or more embodiments, the reversibility of the electrode reaction on the surface of the composite cathode active material may be increased and the conductivity of the electrode may be increased. As a result, cycle characteristics and charge and discharge capacity of a battery containing such composite cathode active material may be improved.

Because a carbonaceous material containing a composite cathode active material shell is derived from a graphene matrix, it has a relatively low density and a high porosity compared to carbonaceous materials in the art derived from a graphite-based material. The d002 interplanar distance of the carbonaceous material including the composite cathode active material shell may be, for example, 3.38 Å or more, 3.40 Å or more, 3.45 Å or more, 3.50 Å or more, 3.60 Å or more, 3.80 Å or more, or 4.00 Å or more. The d002 interplanar distance of the carbonaceous material included in the composite cathode active material shell may be, for example, 3.38 Å to 4.0 Å, 3.38 Å to 3.8 Å, 3.38 Å to 3.6 Å, 3.38 Å to 3.5 Å, or 3.38 Å to 3.45 Å. In contrast, the d002 interplanar distance of a carbonaceous material in the related art derived from a graphite-based material may be, for example, 3.38 Å or less, or 3.35 Å to 3.38 Å.

The first metal oxide may be voltage resistant, thereby preventing or reducing deterioration of the lithium transition metal oxide including the core during charge and discharge at high voltages. A shell may include, for example, one first metal oxide or two or more types (kinds) of a different first metal oxide.

As a result, the high-rate characteristics of the lithium battery including the composite cathode active material is improved, and the high temperature and high voltage cycle characteristics are improved.

In a composite cathode active material, for example, the content (*e.g.,* amount) of a shell is 0.5 wt% to 3 wt%, 0.5 wt% to 2.5 wt%, 0.5 wt% to 2 wt%, or 0.5 wt% to 1.5 wt% of the total weight of the composite cathode active material. In one or more embodiments, the content (*e.g.,* amount) of a first metal oxide may be, for example, 0.3 wt% to 1.8 wt%, 0.3 wt% to 1.5 wt%, 0.3 wt% to 1.2 wt%, or 0.3 wt% to 0.9 wt% of the total weight of the composite cathode active material. By the composite cathode active material including each of a shell and a first metal oxide in such content (*e.g.,* amount) ranges, the cycle characteristics of the lithium battery are further improved.

The content (*e.g.,* amount) of the first metal (*e.g.,* the first metal of the first metal oxide) included in the shell may be, for example, 1 at% to 10 at%, 1 at% to 9 at%, 2 at% to 9 at%, 2 at% to 8 at%, 3 at% to 8 at%, 3 at% to 7 at%, 4 at% to 7 at%, or 4 at% to 6 at%, relative to the total number of atoms in the shell. By including a first metal in the shell in such content (*e.g.,* amount) ranges, the cycle characteristics of the lithium battery including the composite cathode active material may be further improved. The content (*e.g.,* amount) of the first metal element in the shell may be obtained, for example, from a peak obtained by measuring an X-ray photoelectron spectroscopy (XPS) spectrum of the composite cathode active material surface.

The oxygen (O) (*e.g.,* the oxygen of the first metal oxide) content (*e.g.,* amount) of a shell may be, for example, 1 at% to 20 at%, 1 at% to 18 at%, 3 at% to 18 at%, 3 at% to 16 at%, 5 at% to 16 at%, 5 at% to 14 at%, 7 at% to 14 at%, or 7 at% to 12 at% relative to the total number of atoms in the shell. By including oxygen in the shell in such content (*e.g.,* amount) ranges, the cycle characteristics of the lithium battery including the composite cathode active material may be further improved. The content (*e.g.,* amount) of oxygen (O) in the shell may be obtained, for example, from the peak obtained by measuring an XPS spectrum of the composite cathode active material surface.

The carbon content (*e.g.,* amount) of a shell may be, for example, 65 at% to 99 at%, 70 at% to 99 at%, 75 at% to 99 at%, 80 at% to 99 at% at%, 80 at% to 95 at%, 80 at% to 93 at%, 80 at% to 91 at%, or 83 at% to 90 at%, relative to the total number of atoms in the shell. By including carbon in the shell in such content (*e.g.,* amount) ranges, the cycle characteristics of the lithium battery including the composite cathode active material may be further improved. The content (*e.g.,* amount) of carbon in the shell may be obtained, for example, from a peak obtained by measuring the XPS spectrum of the surface of the composite cathode active material.

The first metal included in the first metal oxide may be one or more of (*e.g.,* one or more selected from), for example, Al, Nb, Mg, Sc, Ti, Zr, V, W, Mn, Fe, Co, Pd, Cu, Ag, Zn, Sb, and/or Se. The first metal oxide may be one or more of (e.g., one or more selected from), for example, $Al_2O_z$ (0<z<3), $NbO_x$ (0<x<2. 5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and/or $SeO_y$ (0<y<2). The placement of such first metal oxides in the matrix of the carbonaceous material improves the uniformity (*e.g.,* the substantial uniformity) of a shell disposed on the core, and further improves the voltage resistance of the composite cathode active material. For example, a shell may include $Al_2O_x$ (0<x<3) as the first metal oxide.

The shell may further include one or more types (kinds) of a second metal oxide represented by the formula $M_aO_c$ (0<a≤3, 0<c≤4, where a is 1, 2, or 3, and c is an integer), wherein M is one or more metals of (*e.g.,* one or more metals selected from) Group 2 to Group 13, Group 15, and/or Group 16 of the Periodic Table. For example, the second metal oxide may include the same metal as the first metal oxide, such that c/a, the ratio of a and c in the second metal oxide, has a greater value than b/a, the ratio of a and b of the first metal oxide. For example, c/a > b/a. The second metal oxide is (*e.g.,* selected from), for example, $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and/or $SeO_2$. The first metal oxide may be a reduction product of the second metal oxide. The first metal oxide may be obtained by the reduction of some or all of the second metal oxide. Therefore, the first metal oxide may have a lower oxygen content (e.g., amount) and a higher oxidation number of the metal compared to the second metal oxide. For example, a shell may include a first metal oxide, $Al_2O_x$ (0<x<3) and a second metal oxide, $Al_2O_3$.

In a composite cathode active material, for example, a shell including a carbonaceous material included in a shell and a transition metal of a lithium transition metal oxide included in a core are chemically bound through a chemical bond. Carbon atoms (C) of the carbonaceous material included in the shell and the transition metal (Me) of the lithium transition metal oxide may be chemically bound, for example, via a C-O-Me bond (for example, C-O-Ni bond, or C-O-Co bond) mediated by an oxygen atom. The core and shell are compounded (*e.g.,* are made into a compound) by the chemical bonding of the carbonaceous material included in the shell and the lithium transition metal oxide included in the core. Therefore, it is distinguished from a simple physical mixture of a carbonaceous material and a lithium transition metal oxide.

In one or more embodiments, the first metal oxide and the carbonaceous material included in a shell are also chemically bound via a chemical bond. Here, the chemical bond is, for example, a covalent bond or an ionic bond. A covalent bond is a bond including, for example, at least one of an ester, an ether, a carbonyl group, an amide group, a carbonate anhydride group, and/or an acid anhydride group. An ionic bond is a bond including, for example, a carboxylic acid ion, an ammonium ion, an acyl cationic group, etc.

The thickness of a shell is, for example, 1 nm to 5 $\mu$m, 1 nm to 1 $\mu$m, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, or 1 nm to 20 nm. By having the shell have a thickness in this range, the conductivity of the electrode including the composite cathode active material may be improved.

The composite cathode active material may further include, for example, a third metal doped on the core or a third metal oxide coated on the core. Then, a shell may be disposed on the doped third metal or coated third metal oxide. For example, a third metal may be doped on a surface of the lithium transition metal oxide included in the core, or a third metal oxide may be coated on a surface of the lithium transition metal oxide, and then a shell may be disposed on the third metal and/or third metal oxide. For example, a composite cathode active material includes a core; an interlayer disposed on the core; and a shell disposed on the interlayer, wherein the interlayer may include a third metal or a third metal oxide. The third metal may be one or more metals of (*e.g.,* one or more metals selected from) Al, Zr, W, and/or Co, and the third metal oxide may be $Al_2O_3$, $Li_2O\text{-}ZrO_2$, $WO_2$, $CoO$, $Co_2O_3$, $Co_3O_4$, etc.

A shell including a composite cathode active material includes, for example, one or more of (*e.g.,* one or more selected from) a first metal oxide, a composite including a carbonaceous material, for example graphene, and a lithium fluoride-based compound, and/or a milling product of the composite, wherein the first metal oxide is arranged within a matrix of the carbonaceous material, for example a graphene matrix. A shell is prepared, for example, from a composite including a first metal oxide, a carbonaceous material, for example graphene, and a lithium fluoride-based compound. The composite may further include a second metal oxide in addition to the first metal oxide. The composite may include, for example, two or more types (kinds) of a first metal oxide. The composite may include, for example, two or more types (kinds) of a first metal oxide and two or more types (kinds) of a second metal oxide.

The content (*e.g.,* amount) of one or more of the composites including the composite cathode active material and the milling product thereof may be 3 wt% or less, 2 wt% or less, 1 wt% or less, 0.5 wt% or less, or 0.2 wt% or less, of the total weight of the composite cathode active material. The content (*e.g.,* amount) of one or more of the composite and the milling product thereof may be from 0.01 wt% to 3 wt%, 0.01 wt% to 1 wt%, 0.01 wt% to 0.7 wt%, 0.01 wt% to 0.5 wt%, 0.01 wt% to 0.2 wt%, 0.01 wt% to 0.1 wt%, or 0.03 wt% to 0.07 wt% of the total weight of the composite cathode active material. By the composite cathode active material including one or more composites in such content (*e.g.,* amount) ranges and milling products thereof, the cycle characteristics of a lithium battery including the composite cathode active material may be further improved.

The average diameter of one or more of the first metal oxide and/or the second metal oxide selected from the composite may be 1 nm to 1 $\mu$m, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, 7 nm to 20 nm, or 7 nm to 15 nm. By having a particle diameter in this nanoscale range, the first metal oxide and/or the second metal oxide may be more uniformly (*e.g.,* more substantially uniformly) distributed within a matrix of the carbonaceous material of the composite. Therefore, the composite may be uniformly (*e.g.,* more substantially uniformly) coated on the core to form a shell without agglomeration. In one or more embodiments, the first metal oxide and/or the second metal oxide may be more uniformly (*e.g.,* more substantially uniformly) disposed on the core by having such a range of particle diameters. Therefore, the first metal oxide and/or the second metal oxide may be more uniformly (*e.g.,* more substantially uniformly) disposed on the core, and the voltage resistance characteristic may be more effectively exerted or may be improved.

The average particle diameter of the first metal oxide and the second metal oxide is measured utilizing a measuring device, for example by laser diffraction or dynamic light scattering. The average particle diameter is measured, for example, utilizing a laser scattering particle size distribution meter (for example, Horiba LA-920) and is the value of the median particle diameter (D50), where D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

The uniformity deviation of one or more of (*e.g.,* one or more selected from) the first metal oxide and/or the second metal oxide included in the composite may be 3% or less, 2% or less, or 1% or less. The uniformity (*e.g.,* more substantial uniformity) may be obtained, for example, by XPS. Therefore, one or more of (*e.g.,* one or more selected from) the first metal oxide and/or the second metal oxide may be uniformly (*e.g.,* more substantially uniformly) distributed within the composite with a deviation of 3% or less, 2% or less, or 1% or less.

The carbonaceous material included in the composite may have a branched structure, for example, and one or more metal oxides of (*e.g.,* one or more metal oxides selected from) the first metal oxide and/or the second metal oxide may be distributed within the branched structure of the carbonaceous material. The branched structure of the carbonaceous material may include, for example, a plurality of carbonaceous material particles in contact with each other. By having a branched structure, the carbonaceous material may provide a variety of conductive pathways.

The carbonaceous material included in the composite may be, for example, graphene. The graphene may have a branched structure, for example, and one or more metal oxides of (*e.g.,* one or more metal oxides selected from) the first metal oxide and/or the second metal oxide may be distributed within the branched structure of the graphene. The branched structure of graphene may include, for example, a plurality of graphene particles in contact with each other. By having a branched structure, the graphene may provide a variety of conductive pathways.

The carbonaceous material included in the composite may have, for example, a spherical structure, and one or more metal oxides of (*e.g.,* one or more metal oxides selected from) the first metal oxide and/or the second metal oxide may be distributed within the spherical structure. The size of the spherical structure of the carbonaceous material may be from 50 nm to 300 nm. There may be a plurality of carbonaceous materials having a spherical structure. By having a spherical structure of the carbonaceous material, the composite may have a robust structure.

The carbonaceous material included in the composite may be, for example, graphene. The graphene may have, for example, a spherical structure, and one or more metal oxides of (*e.g.,* one or more metal oxides selected from) the first metal oxide and/or the second metal oxide may be distributed within the spherical structure. The size of the spherical structure of the graphene may be from 50 nm to 300 nm. There may be a plurality of graphene having a spherical structure. By having a spherical structure of graphene, the composite may have a robust structure.

The carbonaceous material included in the composite may have a spiral structure, for example a plurality of spherical structures connected in a spiral structure, and one or more metal oxides of (*e.g.,* one or more metal oxides selected from) the first metal oxide and/or the second metal oxide may be distributed within the spherical structures of the spiral structure. The size of the spiral structure of the carbonaceous material may be from 500 nm to 100 $\mu$m. By having a helical (*e.g.,* spiral) structure of the carbonaceous material, the composite may have a robust structure.

The carbonaceous material included in the composite may be, for example, graphene. The graphene may have a spiral structure, for example a plurality of spherical structures connected in a spiral structure, and one or more metal oxides of (*e.g.,* one or more metal oxides selected from) the first metal oxide and/or the second metal oxide may be distributed within the spherical structures of the spiral structure. The size of the spiral structure of the graphene may be from 500 nm to 100 $\mu$m. By having a helical (*e.g.,* spiral) structure of graphene, the composite may have a robust structure.

The carbonaceous material included in the composite may have a cluster structure, for example, a plurality of spherical structures aggregated in a cluster structure, and one or more metal oxides of (*e.g.,* one or more metal oxides selected from) the first metal oxide and/or the second metal oxide may be distributed within the spherical structures of the cluster structure. The size of the cluster structure of the carbonaceous material may be from 0.5 mm to 10 cm. By having a cluster structure of the carbonaceous material, the composite may have a robust structure.

The carbonaceous material included in the composite may be, for example, graphene. The graphene may have a cluster structure, for example, a plurality of spherical structures aggregated in a cluster structure, and one or more metal oxides of (*e.g.,* one or more metal oxides selected from) the first metal oxide and/or the second metal oxide may be distributed within the spherical structures of the cluster structure. The size of the cluster structure of the graphene may be from 0.5 mm to 10 cm. By having a cluster structure of graphene, the composite may have a robust structure.

The composite may be, for example, a crumpled faceted-ball structure, with one or more metal oxides of (*e.g.,* one or more metal oxides selected from) the first metal oxide and/or the second metal oxide distributed within or on the surface of the structure. By the composite being such a faceted-ball structure, the composite may be readily coated over the surface irregularities of the core.

The composite may be, for example, a planer structure, with one or more metal oxides of (*e.g.,* one or more metal oxides selected from) the first metal oxide and/or the second metal oxide distributed within or on the surface of the structure. By the composite having such a two-dimensional planar structure, the composite may be readily coated over the surface irregularities of the core.

The carbonaceous material included in the composite may extend from the first metal oxide by a distance of 10 nm or less, and may include at least 1 to 20 carbonaceous material layers. For example, a plurality of carbonaceous material layers may be stacked such that a carbonaceous material having a total thickness of 12 nm or less is disposed on the first metal oxide. For example, the total thickness of the carbonaceous material may be from 0.6 nm to 12 nm.

The carbonaceous material included in the composite may be, for example, graphene. The graphene included in the composite may extend from the first metal oxide by a distance of 10 nm or less, and may include at least 1 to 20 graphene layers. For example, a plurality of graphene layers may be stacked such that a graphene having a total thickness of 12 nm or less is disposed on the first metal oxide. For example, the total thickness of the graphene may be from 0.6 nm to 12 nm.

The core included in the composite cathode active material includes, for example, a lithium transition metal oxide represented by Formula 1:

Formula 1 $\qquad Li_aNi_xCo_yM_zO_{2-b}A_b$

In Formula 1, $0.9 \leq a \leq 1.2$, $0.8 \leq x \leq 0.95$, $0 \leq y \leq 0.2$, $0 < z \leq 0.2$, $0 \leq b < 2$, and $x+y+z=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or a combination thereof, A is F, S, Cl, Br, or a combination thereof.

The core included in the composite cathode active material includes, for example, a lithium transition metal oxide represented by at least one of Formula 2 to Formula 4:

$$\text{Formula 2} \qquad \text{LiNi}_x\text{Co}_y\text{Mn}_z\text{O}_2$$

$$\text{Formula 3} \qquad \text{LiNi}_x\text{Co}_y\text{Al}_z\text{O}_2$$

In Formula 2 to Formula 3, $0.8 \leq x \leq 0.95$, $0 < y \leq 0.2$, $0 < z \leq 0.2$, and $x+y+z=1$.

$$\text{Formula 4} \qquad \text{LiNi}_x\text{Co}_y\text{Mn}_v\text{Al}_w\text{O}_2$$

In Formula 4, $0.8 \leq x \leq 0.95$, $0 < y \leq 0.2$, $0 < v \leq 0.2$, $0 < w \leq 0.2$, and $x+y+v+w=1$.

The lithium transition metal oxides of Formula 1 to Formula 4 may have a high nickel content (*e.g.,* amount) of greater than or equal to 80 mol%, greater than or equal to 85 mol%, or greater than or equal to 90 mol%, relative to total number of moles of the transition metals in the lithium transition metal oxide, while providing excellent or suitable initial capacity, room temperature lifetime characteristics, and high temperature lifetime characteristics. For example, in the lithium transition metal oxides of Formula 1 to Formula 4, the nickel content (*e.g.,* amount) may be 80 mol% to 95 mol%, 85 mol% to 95 mol%, or 90 mol% to 95 mol%, relative to total transition metal moles.

The core included in the composite cathode active material includes, for example, a lithium transition metal oxide represented by Formula 5 or Formula 6:

$$\text{Formula 5} \qquad \text{LiaCO}_x\text{M}_y\text{O}_{2\text{-}b}\text{Ab}$$

In Formula 5, $1.0 \leq a \leq 1.2$, $0 \leq b \leq 0.2$, $0.9 \leq x \leq 1$, $0 \leq y \leq 0.1$, and $x+y=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or a combination thereof, and A is F, S, Cl, Br, or a combination thereof.

$$\text{Formula 6} \qquad \text{LiCoO}_2$$

In one or more embodiments, the cathode includes the composite cathode active material. By including the composite cathode active material, the cathode may provide improved cycle characteristics and increased conductivity.

The cathode is prepared, for example, by the following example method, but the present disclosure is not necessarily limited to such methods and may be adapted to conditions as desired and/or required.

First, a cathode active material composition is prepared by mixing the composite cathode active material, a conductive material, a binder, and a solvent. The prepared cathode active material composition is directly coated and dried on an aluminum current collector to prepare a cathode plate having a cathode active material layer. In one or more embodiments, the cathode active material composition is cast on a separate support, and then the film obtained by peeling off from the support is laminated on an aluminum current collector to prepare a cathode plate with a cathode active material layer.

As a conductive material, carbon black, graphite particulates, natural graphite, artificial graphite, acetylene black, ketjenblack, carbon fiber, carbon nanotubes, metal powders such as copper, nickel, aluminum, silver, *etc.,* or metal fibers or metal tubes, conductive polymers such as polyphenylene derivatives, *etc.* are utilized, but the present disclosure is not limited thereto, and any suitable conductive material in the art may be utilized.

As binders, vinylidene fluoride/hexafluoropropylene copolymers, polyvinylidene fluoride, polyacrylonitrile, polymethylmethacrylate, polytetrafluoroethylene (PTFE), mixtures of the aforementioned polymers, styrene butadiene rubber-based polymers, *etc.,* are utilized, and as solvents, N-methylpyrrolidone (NMP), acetone, water, *etc.,* are utilized, but the present disclosure is not necessarily limited thereto, and any suitable binder or solvent in the art may be utilized.

It is also possible to form pores within the electrode plate by adding plasticizers or pore formers to the cathode active material composition.

The contents (*e.g.,* amounts) of the composite cathode active material, conductive material, binder, and solvent utilized in the cathode are at a level generally utilized in a lithium battery. Depending on the use and configuration of the lithium battery, one or more of the conductive material, binder, and/or solvent may not be provided.

The binder content (*e.g.,* amount) of the cathode may be 0.1 wt% to 10 wt% or 0.1 wt% to 5 wt% of the total weight of the cathode active material layer. The composite cathode active material content (*e.g.,* amount) included in the cathode may be from 90 wt% to 99 wt% or from 95 wt% to 99 wt% of the total weight of the cathode active material layer.

In one or more embodiments, the cathode may further include other generally available/generally utilized cathode active materials in addition to the composite cathode active material.

Generally available/generally suitable or utilized cathode active materials are lithium-containing metal oxides, and any of those generally suitable or utilized in the art may be utilized without limitation. For example, one or more types (kinds) of a metal of (e.g., a metal selected from) cobalt, manganese, nickel, and/or a combination thereof and a composite oxide with lithium may be utilized, and specific examples include compounds represented by any of the following formulas $Li_aA_{1-b}B_bD_2$ (in the formula, $0.90 \leq a \leq 1$, and $0 \leq b \leq 0.5$); $Li_aE_{1-b}B_bO_{2-c}D_c$ (in the formula, $0.90 \leq a \leq 1$, $0 \leq b \leq 0.5$, and $0 \leq c \leq 0.05$); $LiE_{2-b}B_bO_{4-c}D_c$ (in the formula, $0 \leq b \leq 0.5$, and $0 \leq c \leq 0.05$); $Li_aNi_{1-b-c}Co_bB_cD_\alpha$ (in the formula, $0.90 \leq a \leq 1$, $0 \leq b \leq 0.5$, $0 \leq c \leq 0.05$, $0 < a \leq 2$); $Li_aNi_{1-b-c}Co_bB_cO_{2-\alpha}F_\alpha$ (in the formula, $0.90 \leq a \leq 1$, $0 \leq b \leq 0.5$, $0 \leq c \leq 0.05$, $0 < a \leq 2$); $Li_aNi_{1-b-c}Co_bB_cO_{2-\alpha}F_2$ (in the formula, $0.90 \leq a \leq 1$, $0 \leq b \leq 0.5$, $0 \leq c \leq 0.05$, $0 < a \leq 2$); $Li_aNi_{1-b-c}Mn_bB_cD_\alpha$ (in the formula, $0.90 \leq a \leq 1$, $0 \leq b \leq 0.5$, $0 \leq c \leq 0.05$, $0 < a \leq 2$); $Li_aNi_{1-b-c}Mn_bB_cO_{2-\alpha}F_\alpha$ (in the formula, $0.90 \leq a \leq 1$, $0 \leq b \leq 0.5$, $0 \leq c \leq 0.05$, $0 < a \leq 2$); $Li_aNi_{1-b-c}Mn_bB_cO_{2-\alpha}F_2$ (in the formula, $0.90 \leq a \leq 1$, $0 \leq b \leq 0.5$, $0 \leq c \leq 0.05$, $0 < a \leq 2$); $Li_aNi_bE_cG_dO_2$ (in the formula, $0.90 \leq a \leq 1$, $0 \leq b \leq 0.9$, $0 \leq c \leq 0.5$, $0.001 \leq d \leq 0.1$).; $Li_aNi_bCo_cMn_dG_eO_2$ (in the formula, $0.90 \leq a \leq 1$, $0 \leq b \leq 0.9$, $0 \leq c \leq 0.5$, $0 \leq d \leq 0.5$, $0.001 \leq e \leq 0.1$.); $Li_aNiG_bO_2$ (in the formula, $0.90 \leq a \leq 1$, $0.001 \leq b \leq 0.1$.); $Li_aCoG_bO_2$ (in the equation, $0.90 \leq a \leq 1$, $0.001 \leq b \leq 0.1$.); $Li_aMnG_bO_2$ (in the equation, $0.90 \leq a \leq 1$, $0.001 \leq b \leq 0.1$.); $Li_aMn_2G_bO_4$ (in the expression, $0.90 \leq a \leq 1$, $0.001 \leq b \leq 0.1$.); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and/or LiFePO4; may be utilized:

In the formula representing the compound, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; J is V, Cr, Mn, Co, Ni, Cu, or a combination thereof.

It is also possible to utilize a compound with a coating layer on the surface of the compound, and it is also possible to utilize a mixture of the compound and a compound with a coating layer. The coating layer added to the surface of the compound includes, for example, a coating element compound of an oxide of a coating element, hydroxide, oxyhydroxide of a coating element, oxycarbonate of a coating element, or hydroxycarbonate of a coating element. The compounds forming such coating layers are amorphous or crystalline. The coating elements included in the coating layer are Mg, Al, Co, K, Na, Ca, Si, Ti, V, Sn, Ge, Ga, B, As, Zr, or mixtures thereof. The method of forming the coating layer is selected in such a way that it does not adversely affect the properties of the cathode active material. Coating methods include, for example, spray coating, immersion, etc. The specific coating method will be well understood by those skilled in the art and may not be described in more detail.

The cathode current collector is for example a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li) or an alloy thereof. The cathode current collector may not be provided. The thickness of the cathode current collector is, for example, from 1 $\mu$m to 100 $\mu$m, from 1 $\mu$m to 50 $\mu$m, from 5 $\mu$m to 25 $\mu$m, or from 10 $\mu$m to 20 $\mu$m.

The cathode current collector may include, for example, a base film and a metal layer disposed on one side or both sides (e.g., opposite sides) of the base film. The base film may include, for example, a polymer. The polymer may be, for example, a thermoplastic polymer. The polymer may be, for example, polyethylene terephthalate (PET), polyethylene (PE), polypropylene (PP), polybutylene terephthalate (PBT), polyimide (PI), or any combination thereof. The polymer may be an insulator. Because the base film includes an insulating thermoplastic polymer, the base film is softened or liquefied to block or reduce the operation of a battery in the case of occurrence of a short circuit, so that a rapid current increase may be inhibited or reduced. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing or substantially preventing a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector decrease, so that stability of the lithium battery may be improved in the case of a short circuit.

A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS foil. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. A metal chip and/or a lead tab may further be added to the metal layer.

The base film may have a thickness of, for example, 1 $\mu$m to 50 $\mu$m, 1.5 $\mu$m to 50 $\mu$m, 1.5 $\mu$m to 40 $\mu$m, or 1 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab.

To improve adhesion between the base film and the metal layer, surface treatment such as corona treatment may be performed on the base film. The thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. The thickness of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the cathode current collector has the above-described structure, the weight of the cathode may be reduced, so that energy density of the cathode and the lithium battery may be increased.

In one or more embodiments, the lithium battery employs a cathode including the composite cathode active material.

By employing a cathode including the composite cathode active material, the lithium battery provides improved cycle characteristics and thermal stability.

The lithium battery is prepared, for example, by the following example method, but the present disclosure is not necessarily limited to such methods and may be adapted to conditions as desired and/or required.

First, a cathode is prepared according to the method of preparing a cathode.

Next, the anode is prepared as follows. The anode is prepared in substantially the same manner as the cathode, except that, for example, an anode active material is utilized instead of a composite cathode active material. In one or more embodiments, the conductive material, binder, and solvent in the anode active material composition may be substantially the same as in a cathode.

For example, an anode active material composition is prepared by mixing an anode active material, a conductor, a binder, and a solvent, and the anode active material composition is coated directly onto a copper current collector to prepare an anode pole plate. In one or more embodiments, the prepared anode active material composition is cast onto a separate support, and the anode active material film peeled off from the support is laminated to a copper current collector to prepare an anode plate.

Any suitable anode active material is possible as long as it is utilized as an anode active material for a lithium battery in the art. For example, the anode active material may include one or more of (e.g., one or more selected from the group consisting of) lithium metal, a lithium-alloyable metal, a transition metal oxide, a non-transition metal oxide, and/or a carbonaceous material.

The lithium-alloyable metal include, for example, Si, Sn, Al, Ge, Pb, Bi, Sb Si-Y alloys (wherein Y is an alkali metal, an alkaline earth metal, a Group 13 element, a Group 14 element, a transition metal, a rare earth element, or a combination thereof, but not Si), Sn-Y alloys (wherein Y is an alkali metal, an alkaline earth metal, a Group 13 element, a Group 14 element, a transition metal, a rare earth element, or a combination thereof, but not Sn). The element Y is, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

The transition metal oxide is, for example, lithium titanate oxide, vanadium oxide, lithium vanadium oxide, etc.

The non-transition metal oxides are, for example, $SnO_2$, $SiO_x$ (0<x<2), *etc.*

The carbonaceous material is, for example, crystalline carbon, amorphous carbon, or a mixture thereof. The crystalline carbon is for example graphite, such as natural or artificial graphite, which is non-shaped (*e.g.,* has no particular and/or consistent polygonal shape), plate-like, flake-like, spherical or fibrous. An amorphous carbon is, for example, soft carbon (low temperature calcined carbon) or hard carbon, mesophase pitch carbides, calcined coke, *etc.*

The contents of the anode active material, conductor, binder, and solvent utilized in the cathode are at a level generally utilized in a lithium battery. Depending on the use and configuration of the lithium battery, one or more of the conductive material, binder, and/or solvent may not be provided.

The binder content (*e.g.,* amount) of the anode may be, for example, 0.1 wt% to 10 wt% or 0.1 wt% to 5 wt% of the total weight of the anode active material layer. The conductive material content (*e.g.,* amount) of the anode may be, for example, 0.1 wt% to 10 wt% or 0.1 wt% to 5 wt% of the total weight of the anode active material layer. The anode active material content (*e.g.,* amount) included in the anode may be, for example, 90 wt% to 99 wt% or 95 wt% to 99 wt% of the total weight of the anode active material layer. If (*e.g.,* when) the anode active material is a lithium metal, the anode may not include (*e.g.,* may exclude) a (e.g., any) binder and a (e.g., any) conductive material.

The anode current collector is composed, for example, of materials that do not react (or should not substantially react) with lithium, for example, do not form either an alloy or a compound. Materials included in the anode current collector may include, for example, copper (Cu), stainless steel, titanium (Ti), iron (Fe), cobalt (Co), and nickel (Ni), but the present disclosure is not necessarily limited thereto, and any suitable material utilized as an electrode current collector in the art may be utilized. The anode current collector may include one of the metals, or may include an alloy or coating material of two or more metals. The anode current collector is, for example, in the form of a plate or foil.

The anode current collector may include, for example, a base film and a metal layer disposed on one side or both sides (*e.g.,* opposite sides) of the base film. The base film may include, for example, a polymer. The polymer may be, for example, a thermoplastic polymer. The polymer may be, for example, polyethylene terephthalate (PET), polyethylene (PE), polypropylene (PP), polybutylene terephthalate (PBT), polyimide (PI), or any combination thereof. The polymer may be an insulating polymer. Because the base film includes an insulating thermoplastic polymer, the base film is softened or liquefied to block or reduce the operation of a battery in the case of occurrence of a short circuit, so that a rapid current increase may be inhibited or reduced. The metal layer may include, for example, copper (Cu), stainless steel, titanium (Ti), iron (Fe), cobalt (Co), nickel (Ni), or an alloy thereof.

The metal layer may correspond to, for example, the first metal substrate. The metal layer may further include a coating layer including the second metal. The anode current collector 21 may further include a metal chip and/or a lead tab. For more detailed descriptions of the base film, the metal layer, the metal chip, and the lead tab of the anode current collector 21, refer to the cathode current collector. Because the anode current collector 21 has the above-described structure, the weight of the anode may be reduced, and accordingly, energy density of the anode and the lithium battery may be increased.

Next, a separator is prepared to be inserted between the cathode and anode.

The separator may be any of those generally or suitably utilized in a lithium battery. The separator may be, for example, a material with a low resistance to ionic migration in an electrolyte and a good or suitable ability to absorb an electrolyte. The separator is in the form of a nonwoven or woven material, for example, selected from glass fiber, polyester, Teflon, polyethylene, polypropylene, polytetrafluoroethylene (PTFE), or a combination thereof. In a lithium-ion battery, for example, windable separators such as polyethylene, polypropylene, etc. may be utilized, and in a lithium-ion polymer battery, a separator having excellent or suitable organic electrolyte impregnating ability may be utilized.

The separator is prepared by the following example method, but the present disclosure is not necessarily limited to such methods and may be adapted to conditions as desired and/or required.

First, a separator composition is prepared by mixing a polymer resin, a filler, and a solvent. The separator composition is directly coated and dried on top of an electrode to form a separator. In one or more embodiments, the separator composition is cast and dried on a support, and then a separator film peeled from the support is laminated to the top of an electrode to form a separator.

The polymer utilized to prepare the separator is not particularly limited and may be any suitable polymer utilized as a separator for an electrode plate. For example, vinylidene fluoride/hexafluoropropylene copolymers, polyvinylidene fluoride (PVDF), polyacrylonitrile, polymethylmethacrylate, or mixtures thereof are utilized.

Next, the electrolyte is prepared.

The electrolyte is, for example, an organic electrolyte. An organic electrolyte is prepared, for example, by dissolving a lithium salt in an organic solvent.

Any suitable organic solvent may be utilized as long as it is utilized as an organic solvent in the art. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolane, 4-methyl dioxolane, N,N-dimethylformamide, dimethylacetamide, dimethyl sulfoxide, dioxane, 1,2-dimethoxyethane, sulforane, dichloroethane, chlorobenzene, nitrobenzene, diethylene glycol, dimethyl ether, or mixtures thereof.

Any suitable lithium salt may be utilized as long as it is utilized as a lithium salt in the art. The lithium salt is, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x, y are natural numbers from 1 to 20), LiCl, LiI, or a mixture thereof.

In one or more embodiments, the electrolyte is a solid electrolyte. The solid electrolyte is, for example, boron oxide, lithium oxynitride, etc., but the present disclosure is not limited thereto, and any suitable solid electrolyte in the art may be utilized. The solid electrolyte is formed on the anode, for example by sputtering, or a separate solid electrolyte sheet may be laminated on an anode.

The solid electrolyte is, for example, an oxide-based solid electrolyte, a sulfide-based solid electrolyte, or polymer solid electrolyte.

The solid electrolyte is, for example, an oxide solid electrolyte. Oxide-based solid electrolytes may be one or more of (e.g., one or more selected from) $Li_{1+x+y}Al_xTi_{2-x}Si_yP_{3-y}O_{12}$ (0<x<2, 0≤y<3), $BaTiO_3$, $Pb(Zr,Ti)O_3$ (PZT), $Pb_{1-x}La_xZr_{1-y}Ti_yO_3$ (PLZT) (O≤x<1, O≤y<1), $Pb(Mg_3Nb_{2/3})O_3-PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2, 0<y<3), $Li_xAl_yTi_z(PO_4)_3$ (0<x<2, 0<y<1, 0<z<3), $Li_{1+x+y}(Al, Ga)_x(Ti, Ge)_{2-x}Si_yP_{3-y}O_{12}$ (0≤x≤1 0≤y≤1), $Li_xLa_yTiO_3$ (0<x<2, 0<y<3), $Li_2O$, LiOH, $Li_2CO_3$, $LiAlO_2$, $Li_2O-Al_2O_3-SiO_2-P_2O_5-TiO_2-GeO_2$, and/or $Li_{3+x}La_3M_2O_{12}$ (M = Te, Nb, or Zr, where x is an integer from 1 to 10). The solid electrolyte is prepared by, for example, sintering. For example, the oxide-based solid electrolyte may be a garnet-type or kind solid electrolyte selected from $Li_7La_3Zr_2O_{12}$ (LLZO) and/or $Li_{3+x}La_3Zr_{2-a}M_aO_{12}$ (M doped LLZO, M=Ga, W, Nb, Ta, or Al, wherein x is an integer from 1 to 10).

The sulfide-based solid electrolyte may include, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$,

$B_2S_3$, or a combination thereof. The sulfide-based solid electrolyte particles may be $Li_2S$ or $P_2S_5$. Sulfide-based solid electrolyte particles may have high lithium ion conductivity compared to other inorganic compounds. For example, a sulfide-based solid electrolyte includes $Li_2S$ and $P_2S_5$. When the sulfide-based solid electrolyte material including the sulfide solid electrolyte includes $Li_2S$-$P_2S_5$, the mixed molar ratio of $Li_2S$ to $P_2S_5$ may be in the range of, for example, about 50:50 to about 90:10. In one or more embodiments, an inorganic solid electrolyte prepared by adding $Li_3PO_4$, halogens, halogen compounds, $Li_{2+2x}Zn_{1-x}GeO_4$ ("LISICON", $0 \leq x < 1$), $Li_{3+y}PO_{4-x}N_x$ ("LIPON", $0 < x < 4$, $0 < y < 3$), $Li_{3.25}Ge_{0.25}P_{0.75}S_4$ ("ThioLISICON"), $Li_2O$-$Al_2O_3$-$TiO_2$-$P_2O_5$ ("LATP"), etc., to an inorganic solid electrolyte of $Li_2S$-$P_2S_5$, $SiS_2$, $GeS_2$, $B_2S_3$, or a combination thereof may be utilized as the sulfide solid electrolyte. Non-limiting examples of sulfide solid electrolyte materials include $Li_2S$-$P_2S_5$; $Li_2S$-$P_2S_5$-LiX (X=halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$ ($0 < m < 10$, $0 < n < 10$, Z=Ge, Zn or Ga); $Li_2S$-$GeS_2$; $Li_2S$-$SiS_2$-$Li_3PO_4$; and $Li_2S$-$SiS_2$-$Li_pMO_q$ ($0 < p < 10$, $0 < q < 10$, M=P, Si, Ge, B, Al, Ga, or In). In this regard, the sulfide-based solid electrolyte material may be prepared by treating a raw starting material of the sulfide-based solid electrolyte material (for example, $Li_2S$, $P_2S_5$, etc.) by a melt quenching method, a mechanical milling method, etc. In one or more embodiments, calcination may be performed after the treatment.

The sulfide-based solid electrolyte may be amorphous, crystalline, or a mixture thereof. The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include (e.g., may exclude) a liquid. The polymer solid electrolyte includes a polymer, and examples of the polymer include polyethylene oxide (PEO), polyvinylidene fluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methyl methacrylate) (PMMA), polyethylene glycol (PEG), polyacrylonitrile (PAN), polytetrafluoroethylene (PTFE), polyethylene dioxythiophene (PEDOT), polypyrrole (PPY), polyaniline, polyacetylene, Nafion, Aquivion, Flemion, Gore, Aciplex, Morgane ADP), sulfonated poly(ether ketone) (SPEEK), sulfonated poly(arylene ether ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, the present disclosure is not limited thereto, and any suitable polymer electrolytes generally available in the art may also be utilized.

Any lithium salts generally available in the art may also be utilized. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x}+1 SO_2)(C_yF_{2y}+1 SO_2)$ (where x and y may each independently be from 1 to 20), LiCl, LiI, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more.

The gel electrolyte is, for example, a polymer gel electrolyte. For example, the gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the polymer solid electrolyte. The organic solvent may be selected from organic solvents utilized in liquid electrolytes. The lithium salt may be selected from lithium salts utilized in polymer solid electrolyte. The ionic liquid refers to a salt in a liquid state, and a molten salt at room temperature composed solely of ions and having a melting point below room temperature. The ionic liquid may include, for example, at least one compound including a) at least one cation of (e.g., at least one cation selected from) ammonium, pyrimidium, pyridinium, pyrimidium, imidazolium, piperidinium, pyrazolium, oxazolium, pyridazinium, phosphonium, sulfonium, triazole, and/or any mixture thereof, and b) at least one anion of (e.g., at least one anion selected from) $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$ $CF_3SO_3^-$, $(FSO_2)_2N^-$, $(C_2F_5SO_2)_2N^-$, $(C_2F_5SO_2)(CF_3SO_2)N^-$, and/or $(CF_3SO_2)_2N^-$. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

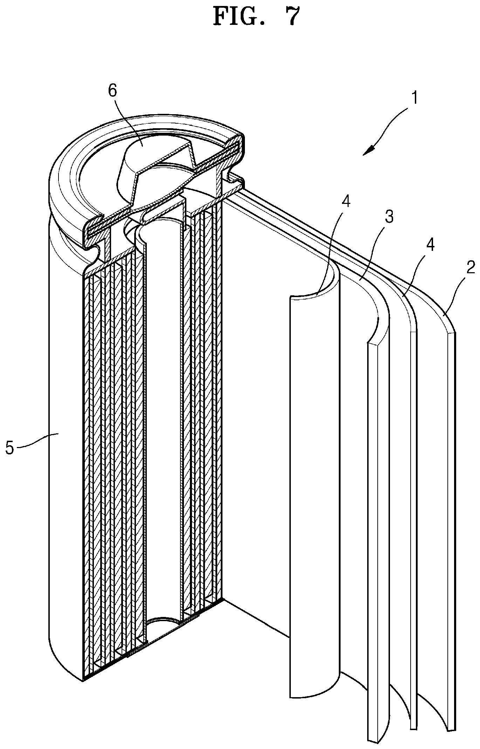

Referring to FIG. 7, a lithium battery 1 according to one or more embodiments includes a cathode 3, an anode 2, and a separator 4. The cathode 3, anode 2, and separator 4 are wound or folded to form a battery structure. The formed battery structure is accommodated in the battery case 5. An organic electrolyte is injected into the battery case 5 and sealed with a cap assembly 6 to complete the lithium battery 1. The battery case 5 is cylindrical, but the present disclosure is not necessarily limited to this shape, and may be, for example, angular, thin-film, pouch-type or kind, etc.

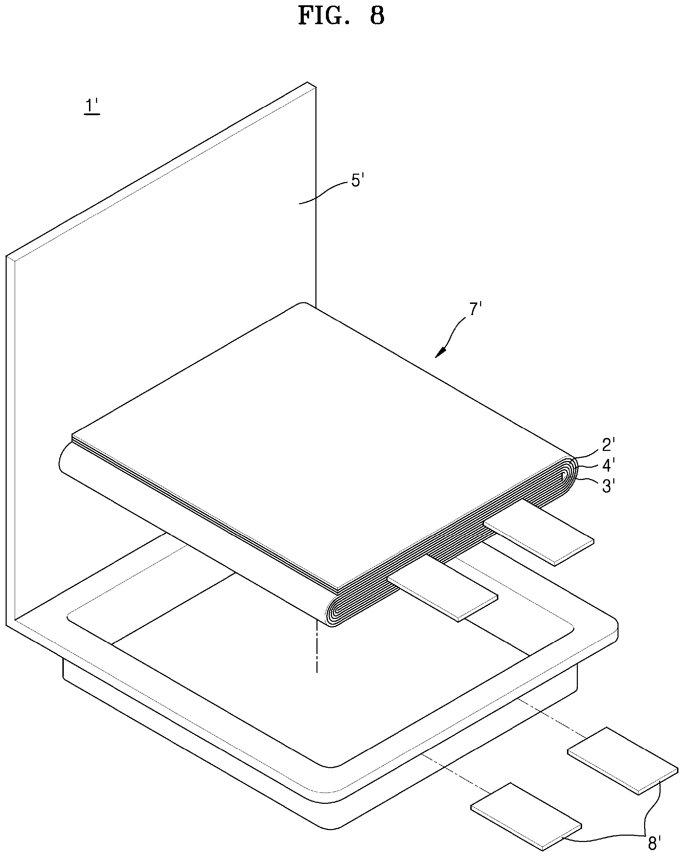

Referring to FIG. 8, the lithium battery 1' according to one or more embodiments includes a cathode 3', an anode 2', and a separator 4'. The separator 4' is positioned between the cathode 3' and the anode 2', and the cathode 3', the anode 2', and the separator 4' are wound or folded to form a battery structure 7'. The formed battery structure 7' is accommodated in the battery case 5'. The battery structure 7' may include an electrode tab 8', which serves as an electrical pathway for inducing a current formed in the battery structure 7' to the outside. An organic electrolyte is injected into the battery case 5' and sealed to complete the lithium battery 1'. The battery case 5' is angular, but the present disclosure is not necessarily limited to this shape, and may be, for example, cylindrical, thin-film, pouch-type or kind, etc.

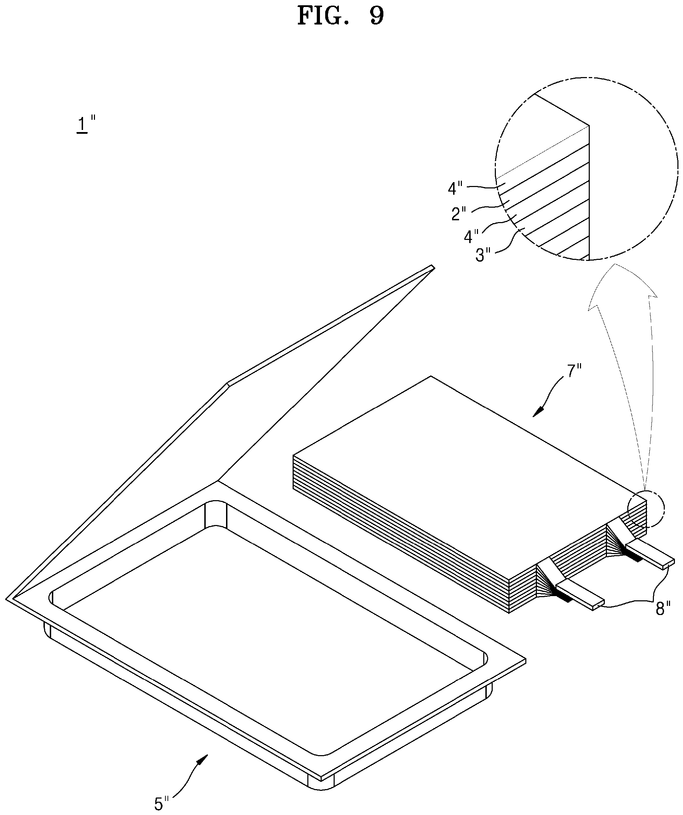

Referring to FIG. 9, the lithium battery 1" according to one or more embodiments includes a cathode 3", an anode 2", and a separator 4". The separator 4" is positioned between the cathode 3" and the anode 2" to form a battery structure 7". The battery structure 7" is stacked in a bicellular structure and then accommodated in a battery case 5". The battery structure 7" may include an electrode tab 8", which serves as an electrical pathway for inducing a current formed in the battery structure 7" to the outside. An organic electrolyte is injected into the battery case 5" and sealed to complete the lithium battery 1". The battery case 5" is angular, but the present disclosure is not necessarily limited to this shape, and may be, for example, cylindrical, thin-film, pouch-type or kind, etc.

A pouch-type or kind lithium battery corresponds to the battery cases in the lithium batteries of FIG. 7 to FIG. 9. The pouch-type or kind lithium battery includes one or more battery structures. A separator is positioned between a cathode and an anode to form a battery structure. The battery structure is stacked in a bicellular structure, then impregnated with an organic electrolyte, accommodated and sealed in a pouch to form a pouch-type or kind lithium battery. For example, the cathode, anode, and separator are simply stacked and accommodated in a pouch in the form of an electrode assembly, or they are rolled or folded into a jellyroll electrode assembly and accommodated in a pouch. The pouch is then filled with an organic electrolyte and sealed to form a lithium battery.

Lithium batteries have excellent or suitable lifetime characteristics and relatively high-rate characteristics, so they are utilized, for example, in electric vehicles (EVs). For example, they are utilized in hybrid vehicles, such as plug-in hybrid electric vehicles (PHEVs). In one or more embodiments, they are utilized in fields that require large amounts of power storage. For example, they are utilized in e-bikes and power tools.

A plurality of lithium batteries are stacked to form a battery module, and a plurality of battery modules form a battery pack. Such battery packs may be utilized in any device that requires high-capacity and high power. For example, they may be utilized in laptops, smartphones, electric vehicles, *etc.* A battery module includes, for example, a plurality of batteries and a frame that holds them. A battery pack includes, for example, a plurality of battery modules and a bus bar connecting them. The battery module and/or battery pack may further include a cooling device. The plurality of battery packs are controlled by a battery management system. The battery management system includes a battery pack, and a battery controller connected to the battery pack.

A method of preparing a composite cathode active material according to one or more embodiments includes: providing a lithium transition metal oxide; providing a composite; and mechanically milling the lithium transition metal oxide, the composite, and lithium hexafluorophosphate; wherein the composite includes one or more types (kinds) of a first metal oxide represented by formula $M_aO_b$ ($0<a\leq3$, $0<b<4$, wherein a is 1, 2, or 3, and b is not an integer); a carbonaceous material; and a doped fluorine (F) element, wherein the first metal oxide is arranged within a matrix of a carbonaceous material, wherein M is one or more metals of (*e.g.,* one or more metals selected from) Group 2 to Group 13, Group 15, and/or Group 16 of the Periodic Table. In mechanically milling, the milling method is not particularly limited and may be any suitable method available in the art of mechanically contacting the lithium transition metal oxide and the composite.

A lithium transition metal oxide is provided. The lithium transition metal oxide is for example a compound represented by Formula 1 to Formula 6.

Providing the composite includes, for example, supplying a reaction gas including a carbon source gas to a structure including the metal oxide and heat treating the resulting structure to provide the composite.

Providing the composite includes, for example, supplying a reaction gas including a carbon source gas to one or more types (kinds) of a second metal oxide represented by $M_aO_c$ ($0<a\leq3$, $0<c\leq4$, where a is 1, 2, or 3, and b is an integer) and heat treating to prepare an undoped composite, wherein M is one or more metals of (*e.g.,* one or more metals selected from) Group 2 to Group 13, Group 15, and/or Group 16 of the Periodic Table.

The carbon source gas is a compound represented by Formula 7, or one or more mixtures of (*e.g.,* one or mixtures selected from the group consisting of) a compound represented by Formula 7, a compound represented by Formula 8, and/or an oxygen-containing gas represented by Formula 9.

Formula 7 $CnH_{(2n+2-a)}[OH]a$

In Formula 7, n is 1 to 20 and a is 0 or 1;

Formula 8          CnH2n

In Formula 8, n is 2 to 6;

Formula 9          $C_xH_yO_z$

In Formula 9, x is 0 or an integer from 1 to 20, y is 0 or an integer from 1 to 20, and z is 1 or 2.

The compound represented by Formula 7 and the compound represented by Formula 8 may be one or more of (*e.g.,* one or more selected from the group consisting of) methane, ethylene, propylene, methanol, ethanol, and/or propanol. The oxygen-containing gas represented by Formula 9 includes, for example, carbon dioxide ($CO_2$) and carbon monoxide (CO), water vapor ($H_2O$), or mixtures thereof.

Supplying the reaction gas including a carbon source gas to a second metal oxide represented by $M_aO_c$ ($0 < a \leq 3$, $0 < c \leq 4$, where a is 1, 2, or 3, and c is an integer) and heat treating the resulting structure may be followed by cooling utilizing one or more inert gases of (*e.g.,* one or more inert gases selected from the group consisting of) nitrogen, helium, and/or argon. Cooling refers to adjusting to room temperature (20 °C to 25 °C). The carbon source gas may include one or more inert gases of (*e.g.,* one or more inert gases selected from the group consisting of) nitrogen, helium, and/or argon.

Depending on the gas phase reaction in the method of preparing the composite, growing a carbonaceous material, for example graphene, may be carried out under one or more suitable conditions.

According to the first condition, for example, methane is first supplied to the reactor in which the second metal oxide represented by $M_aO_c$ ($0 < a \leq 3$, $0 < c \leq 4$, where a is 1, 2, or 3, and c is an integer) is arranged, and heated up to a heat treatment temperature (T). The heating time to the heat treatment temperature (T) is from 10 minutes to 4 hours, and the heat treatment temperature (T) is in the range of 700 °C to 1100 °C. Heat treatment is carried out at the heat treatment temperature (T) for the reaction time. The reaction time is, for example, 4 hours to 8 hours. The resulting heat-treated product is cooled to room temperature to prepare the composite. The time for cooling from the heat treatment temperature (T) to room temperature is, for example, 1 hour to 5 hours.

According to the second condition, for example, hydrogen is first supplied to the reactor in which the second metal oxide represented by $M_aO_c$ ($0 < a \leq 3$, $0 < c \leq 4$, wherein a is 1, 2, or 3, and c is an integer) is arranged, and heated up to a heat treatment temperature (T). The heating time to the heat treatment temperature (T) is from 10 minutes to 4 hours, and the heat treatment temperature (T) is in the range of 700 °C to 1100 °C. After heat treatment at the heat treatment temperature (T) for a certain reaction time, methane gas is supplied and heat treatment is performed for the remaining reaction time. The reaction time is, for example, 4 hours to 8 hours. The resulting heat-treated product is cooled to room temperature to prepare the composite. Nitrogen is supplied during cooling. The time for cooling from the heat treatment temperature (T) to room temperature is, for example, 1 hour to 5 hours.

According to the third condition, for example, hydrogen is first supplied to the reactor in which the second metal oxide represented by $M_aO_c$ ($0 < a \leq 3$, $0 < c \leq 4$, wherein a is 1, 2, or 3, and c is an integer) is arranged, and heated up to a heat treatment temperature (T). The heating time to the heat treatment temperature (T) is from 10 minutes to 4 hours, and the heat treatment temperature (T) is in the range of 700 °C to 1100 °C. After heat treatment at the heat treatment temperature (T) for a certain reaction time, a mixed gas of methane and hydrogen is supplied and heat treatment is performed for the remaining reaction time. The reaction time is, for example, 4 hours to 8 hours. The resulting heat-treated product is cooled to room temperature to prepare the composite. Nitrogen is supplied during cooling. The time for cooling from the heat treatment temperature (T) to room temperature is, for example, 1 hour to 5 hours.

In preparing the composite, when the carbon source gas includes water vapor, a composite having excellent or suitable conductivity can be obtained. The content (*e.g.,* amount) of water vapor in the gas mixture is not limited and is, for example, from 0.01 vol% to 10 vol% based on 100 vol% of the total carbon source gas. The carbon source gas is, for example, methane; a mixture including methane and an inert gas; or a mixture including methane and an oxygen-containing gas.

The carbon source gas may be, for example, methane; a mixture of methane and carbon dioxide; or a mixture of methane, carbon dioxide, and water vapor. In a mixture of methane and carbon dioxide, the molar ratio of methane to carbon dioxide is about 1:0.20 to 1:0.50, about 1:0.25 to 1:0.45, or about 1:0.30 to 1:0.40. In a mixture of methane, carbon dioxide, and water vapor, the molar ratio of methane to carbon dioxide to water vapor is about 1:0.20 to 0.50:0.01 to 1.45, about 1:0.25 to 0.45:0.10 to 1.35, or about 1:0.30 to 0.40:0.50 to 1.0.

The carbon source gas is, for example, carbon monoxide or carbon dioxide. The carbon source gas is, for example, a mixture of methane and nitrogen. In a mixture of methane and nitrogen, the molar ratio of methane to nitrogen is about 1:0.20 to 1:0.50, about 1:0.25 to 1:0.45, about 1:0.30 to 1:0.40. In one or more embodiments, the carbon source gas may not include (*e.g.,* may exclude) an (*e.g.,* any) inert gas such as nitrogen.

The heat treatment pressure may be selected by considering the heat treatment temperature, the composition of the gas mixture, and the amount of carbon coating desired or suitable. The heat treatment pressure may be controlled or selected by adjusting the amount of incoming gas mixture and the amount of outgoing gas mixture. The heat treatment pressure may be, for example, 0.5 atm or more, 1 atm or more, 2 atm or more, 3 atm or more, 4 atm or more, or 5 atm or more.

The heat treatment time is not particularly limited and may be adjusted as appropriate or suitable depending on the heat treatment temperature, the pressure at the time of heat treatment, the composition of the gas mixture, and the amount of carbon coating desired or suitable. For example, the reaction time at the heat treatment temperature may be, for example, 10 minutes to 100 hours, 30 minutes to 90 hours, or 50 minutes to 40 hours. For example, as the heat treatment time increases, the amount of carbon deposited, for example, the amount of graphene (carbon), increases, and the electrical properties of the composite may be improved. However, this trend may not necessarily be directly proportional to time. For example. After a certain period of time, no further carbon deposition, for example, graphene deposition, may occur or the deposition rate may decrease.

An undoped composite is obtained by providing a substantially uniform coating, for example, graphene coating, of a carbonaceous material, on one or more of (e.g., one or more selected from among) the second metal oxide represented by $M_aO_c$ (0<a≤3, 0<c≤4, wherein a is 1, 2, or 3, and c is an integer) and/or its reduction product, which is the first metal oxide represented by $M_aO_b$ (0<a≤3, 0<b<4, wherein a is 1, 2, or 3, and b is not an integer), even at a relatively low temperature through the gas-phase reaction of the carbon source gas.

The composite includes, for example, a matrix of the carbonaceous material, for example, a graphene matrix having one or more structures of (e.g., one or more structures selected from) a spherical structure, a spiral structure in which a plurality of spherical structures are connected, a cluster structure in which a plurality of spherical structures are aggregated, and/or a sponge structure, and one or more of (e.g., one or more selected from) a first metal oxide represented by $M_aO_b$ (0<a≤3, 0<b<4, wherein a is 1, 2, or 3, and b is not an integer) and/or a second metal oxide represented by $M_aO_b$ (0<a≤3, 0<c≤4, wherein a is 1, 2, or 3, and c is an integer), arranged within the matrix of the carbonaceous material.

Next, a lithium transition metal oxide composite and a lithium hexafluorophosphate are mechanically milled. A Novilta mixer (manufactured by Hosokawa Micron Corporation), *etc.* may be utilized during milling. The rotational speed of the mixer during milling is, for example, from 1000 rpm to 2500 rpm, or from 1200 rpm to 2300 rpm, If (*e.g.,* when) the milling speed is less than 1000 rpm, the shear force exerted on the lithium transition metal oxide and the composite is weak, making it difficult for the lithium transition metal oxide and the composite to form a chemical bond. If (*e.g.,* when) the milling speed is too high, the composition may occur in too short a time, making it difficult for the composite to be uniformly coated on the lithium transition metal oxide to form a substantially uniform and substantially continuous shell. The milling time may be, for example, 5 minutes to 100 minutes, 5 minutes to 60 minutes, or 5 minutes to 30 minutes. If (*e.g.,* when) the milling time is too short, it may be difficult to uniformly coat the composite on the lithium transition metal oxide to form a substantially uniform and substantially continuous shell. If (*e.g.,* when) the milling time is too long, production efficiency may decrease.

The content (*e.g.,* amount) of a lithium hexafluorophosphate is 3 wt% or less, 2 wt% or less, 1 wt% or less, 0.1 wt% to 1 wt%, 0.1 wt% to 0.5 wt%, 0.1 wt% to 0.3 wt%, or 0.2 wt% to 0.3 wt%, based on 100 wt% (*e.g.,* the total weight) of a lithium transition metal oxide, a composite and a lithium hexafluorophosphate.

The content (*e.g.,* amount) of the composite may be 3 wt% or less, 2 wt% or less, 1 wt% or less, of the total weight of the lithium transition metal oxide composite and a lithium fluoride-based compound, such as the lithium hexafluorophosphate. The content (*e.g.,* amount) of the composite may be, for example, 0.01 wt% to 3 wt%, 0.1 wt% to 2 wt%, or 0.1 wt% to 1 wt% of the total weight of the lithium transition metal oxide composite and the lithium fluoride-based compound. For example, for 100 wt% of the mixture of the lithium transition metal oxide composite and the lithium fluoride-based compound, the composite content (*e.g.,* amount) may be 0.01 wt% to 3 wt%, 0.1 wt% to 3 wt%, 0.1 wt% to 2 wt%, or 0.1 wt% to 1 wt%.

The average particle diameter (D50) of the lithium transition metal oxide and the composite and the composite utilized for mechanical milling of the lithium hexafluorophosphate is, for example, from 1 $\mu$m to 20 $\mu$m, from 3 $\mu$m to 15 $\mu$m, or from 5 $\mu$m to 10 $\mu$m. And the average particle diameter of the lithium hexafluorophosphate is 10 nm to 2000 nm, or 50 nm to 1500 nm.

The disclosure will now be described in more detail with reference to the following Examples and Comparative Examples. However, these embodiments are intended to illustrate the present disclosure and are not intended to limit the scope of the present disclosure.

**Fabrication of Composite**

**Preparation Example 1: Al$_2$O$_3$@Gr composite**

Al$_2$O$_3$ particles (average particle diameter: about 20 nm) were placed in a reactor, and then the temperature inside the reactor was raised to 1000 °C under the condition that $CH_4$ was supplied into the reactor at about 300 sccm and 1 atm for about 30 minutes.

The reactor was then maintained at the temperature for 7 hours to perform the heat treatment. The temperature inside the reactor was then adjusted to room temperature (20°C to 25°C) to obtain a composite including $Al_2O_3$ particles and its reduction product, $Al_2O_z$ (0<z<3) particles embedded in graphene.

The alumina content (e.g., amount) included in the composite was 70 wt%.

**Fabrication of Composite Cathode Active Material**

**Example 1: NCA91 coated with 0.2 wt% $Al_2O_3$@Gr composite and 0.1 wt% $LiPF_6$**

$LiNi_{0.91}Co_{0.05}Al_{0.04}O_2$ (hereinafter referred to as NCA91), $LiPF_6$, and the composite obtained in Preparation Example 1 were milled utilizing a Nobilta mixer (manufactured by Hosokawa Micron Powder Systems, Japan) at a rotational speed of about 1000 rpm to 2000 rpm for about 5 minutes to 30 minutes to obtain a composite cathode active material.

The mixed weight ratio of NCA, $LiPF_6$, and the composite obtained according to Preparation Example 1 was 99.7:0.1:0.2.

**Example 2: NCA91 coated with 0.2 wt% $Al_2O_3$@Gr composite and 0.2 wt% $LiPF_6$**

The composite cathode active material was prepared by substantially the same method as in Example 1, except that the mixed weight ratio of NCA, $LiPF_6$ and the composite obtained according to Preparation Example 1 was changed to 99.6:0.2:0.2.

**Example 3: NCA91 coated with 0.2 wt% $Al_2O_3$@Gr composite and 0.3 wt% $LiPF_6$**

The composite cathode active material was prepared by substantially the same method as in Example 1, except that the weight ratio of NCA91, $LiPF_6$, and the composite obtained according to Preparation Example 1 was changed to 99.5:0.3:0.2.

**Comparative Example 1: NCA91 coated with 0.2 wt% $Al_2O_3$@Gr composite**

The composite cathode active material was prepared in substantially the same manner as in Example 1, except that $LiNi_{0.91}Co_{0.05}Al_{0.04}O_2$ (hereinafter referred to as NCA91) and the composite obtained in Preparation Example 1 were utilized instead of $LiNi_{0.91}Co_{0.05}Al_{0.04}O_2$, $LiPF_6$, and the composite obtained in Preparation Example 1. NCA91 and the composite obtained in Preparation Example 1 were milled utilizing the Nobilta mixer in substantially the same manner as in Example 1. The mixed weight ratio of NCA91 and $Al_2O_3$@Gr composite was 99.8:0.2.

**Comparative Example 2: LiF coated NCA**

$LiNi_{0.91}Co_{0.05}Al_{0.04}O_2$ (hereinafter referred to as NCA) and $LiPF_6$ were milled utilizing a Nobilta mixer (manufactured by Hosokawa Micron Powder Systems, Japan) at a rotational speed of about 1000 rpm to 2000 rpm for about 5 minutes to 30 minutes to obtain a composite cathode active material.

The mixed weight ratio of NCA and $LiPF_6$ was 99.7:0.3.

**Comparative Example 3: a blend of NCA coated with $Al_2O_3$@Gr composite and NCA coated with LiF**

The composite cathode active material in Comparative Example 1 and the composite cathode active material in Comparative Example 2 were mixed in a Nobilta mixer (manufactured by Hosokawa Micron Powder Systems, Japan) at a 1:1 weight ratio by milling at a rotational speed of about 1000 rpm for about 10 minutes to obtain the composite cathode active material.

**Comparative Example 4: $Al_2O_3$-GB and LiBr coated NCA**

$LiNi_{0.91}Co_{0.05}Al_{0.04}O_2$ (NCA), the composite obtained in Preparation Example 1, and LiBr were milled for about 10 minutes at a rotational speed of about 1000 rpm utilizing a Nobilta mixer (manufactured by Hosokawa Micron Powder Systems, Japan) to obtain a composite cathode active material. The mixed weight ratio of NCA, LiBr, and the composite obtained according to Preparation Example1 was 99.7:0.1 :0.2.

**Comparative Example 5: bare NCA91**

NCA91 was utilized as a bare cathode active material.

**Fabrication of a Lithium Battery (Half Battery**

**Example 4**

**Fabrication of Cathode**

A mixture of the composite cathode active material prepared in Example 1, carbon conductive material (Denka Black), and polyvinylidene fluoride (PVdF) in a weight ratio of 96:2:2 was mixed with N-methylpyrrolidone (NMP) in agate induction to prepare a slurry.

The slurry was bar-coated on a 15 $\mu$m-thick aluminum current collector, dried at room temperature, dried once again under vacuum at 120 °C, rolled and punched to prepare a 55 $\mu$m-thick cathode plate.

The loading level of the electrode was 10.5 mg/cm$^2$, and the composite density of the electrode was 3.6 g/cc.

**Preparation of coin cell**

Using the prepared cathode plate, coin cells were prepared utilizing lithium metal as the counter electrode, a PTFE separator, and a solution of 1.15 M LiPF$_6$ and 1.5 wt% vinylene carbonate (VC) dissolved in ethylene carbonate (EC) + ethyl methyl carbonate (EMC) + dimethyl carbonate (DMC) (2:4:4 volume ratio) as the electrolyte, respectively.

**Example 5 and Example 6**

Coin cells were prepared in substantially the same manner as in Example 4, except that instead of the composite cathode active material prepared in Example 1, the composite cathode active materials prepared in Example 2 and Example 3 were utilized, respectively.

**Comparative Examples 6 to 10**

Coin cells were prepared in substantially the same manner as in Example 4, except that instead of the composite cathode active material prepared in Example 1, the composite cathode active materials prepared in Comparative Example 1 to Comparative Example 5 were utilized, respectively.

**Evaluation Example 1: Evaluation of XPS spectrum**

During the fabrication of the undoped composite prepared in Preparation Example 1, X-ray photoelectron spectroscopy (XPS) spectrum were measured utilizing a Quantum 2000 (manufactured by Physical Electronics) over time. XPS spectra of the C 1s orbital and Al 2p orbital were measured for samples before heating up, after 1 minute, after 5 minutes, after 30 minutes, after 1 hour, and after 4 hours, respectively. At the beginning of heating up, only the peak for the Al 2p orbital appeared and no peak for the C 1s orbital. After 30 minutes, the peak for the C 1s orbital is clearly visible, and the size of the peak for the Al 2p orbital is significantly reduced.

After 30 minutes, the peak for the C 1s orbital near 284.5 eV was clearly visible, due to C-C bonds and C=C bonds caused by the growth of graphene.

As the reaction time progressed, the peak position of the Al 2p orbital was shifted towards a lower binding energy (eV) due to the decrease in the oxidation number of aluminum.

Therefore, as the reaction progressed, it was observed that graphene grew on the Al$_2$O$_3$ particles and Al$_2$O$_x$ (0<x<3), a reduction product of Al$_2$O$_3$, was produced.

The average content (*e.g.,* amount) of carbon and aluminum was determined by XPS analysis of 10 regions of the composite sample prepared in Preparation Example 1. The deviation of the aluminum content (*e.g.,* amount) in each region was calculated from the measured results. The deviation of the aluminum content (*e.g.,* amount) was expressed as a percentage of the mean value, which is called uniformity. The percentage of the deviation of the aluminum content (*e.g.,* amount) to the mean value, *e.g.,* the uniformity of the aluminum content (*e.g.,* amount), was 1%. Therefore, it was confirmed that the alumina was uniformly (*e.g.,* substantially uniformly) distributed in the composite prepared in Preparation Example 1.

**Evaluation Example 2: Evaluation of XPS spectrum and residual lithium**

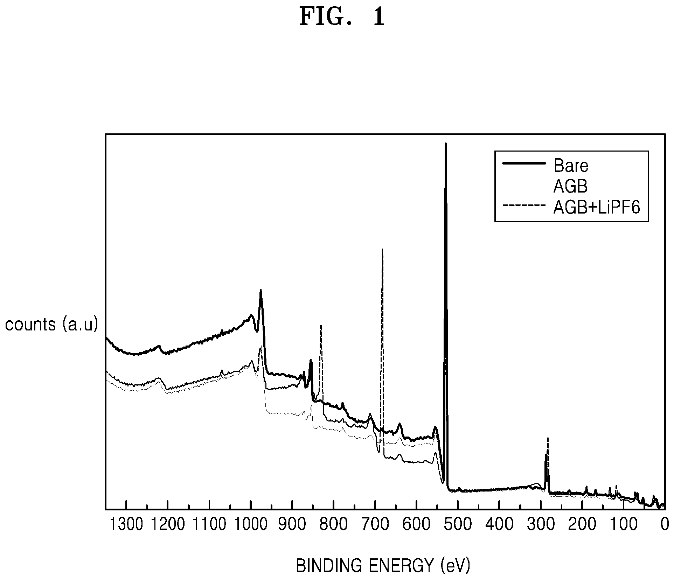

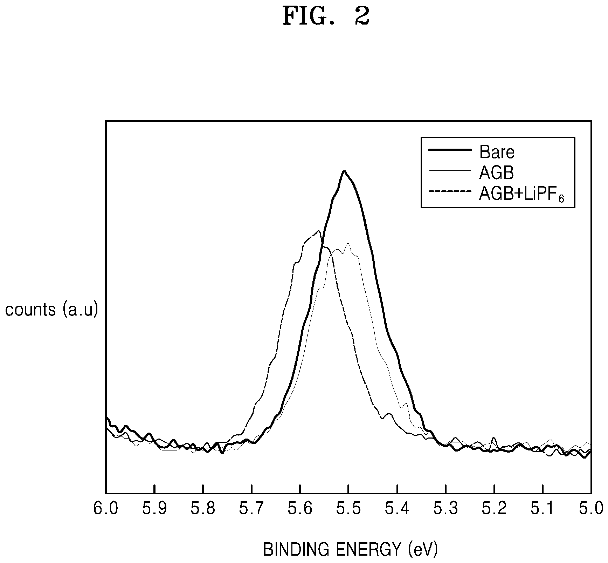

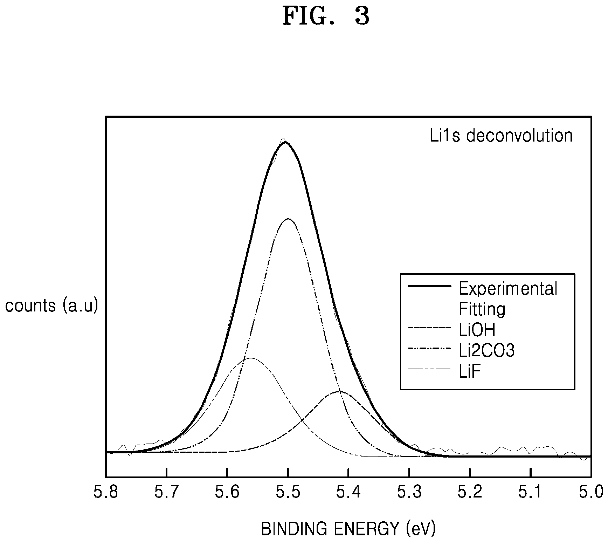

XPS spectra of a composite cathode active material prepared in Example 3, Comparative Example 1, Comparative Example 2, and a bare NCA of Comparative Example 5 are shown in FIG. 1 to FIG. 5. FIG. 1 to FIG. 5 shows the XPS analysis spectra for Bare (for the bare NCA prepared in Comparative Example 5), AGB (for the composite cathode active material of Comparative Example 1), and AGB+LiPF$_6$ (for the composite cathode active material of Example 3). FIG. 1 shows the XPS analysis spectra for C 1s, O 1s, Li 1s, and Ni 2p for a composite cathode active material prepared in Example 3, Comparative Example 1, and a bare NCA in Comparative Example 5. FIG. 2 shows an XPS analysis spectrum for Li 1s, and FIG. 3 shows a possible deconvolution of the Li 1s signal of bare NCA of Comparative Example 5 in FIG. 2.

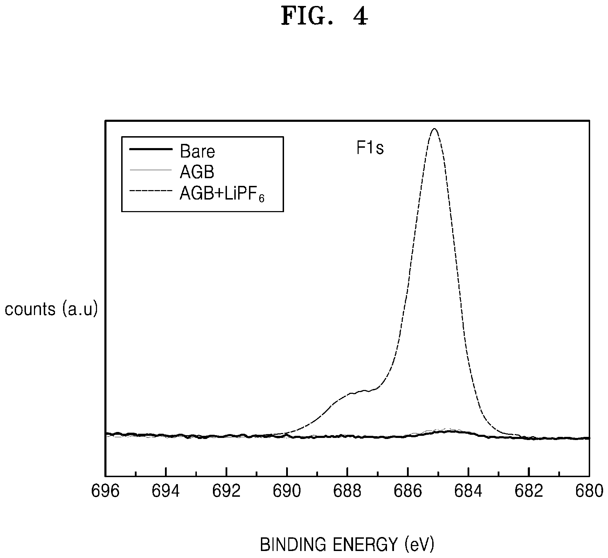

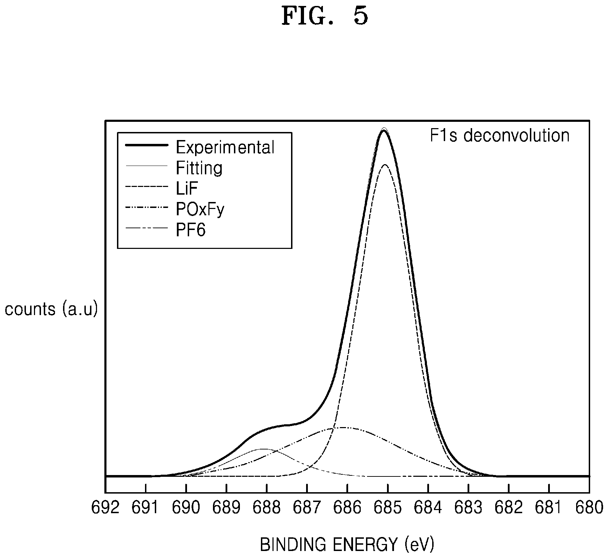

FIG. 4 shows the XPS analysis spectrum for F 1s in FIG. 1 and FIG. 5 shows a possible deconvolution of the F 1s signal of the composite cathode active material of Example 3 in FIG. 4.

Table 1 shows the LiOH, Li$_2$CO$_3$ and LiF contents of a sample calculated based on the Li 1s XPS signal.

This XPS analysis was performed to understand why the electrochemical properties of the LiPF$_6$-doped sample was improved. Analyzing the C 1s and O 1s peaks shown in FIG. 1 and FIG. 2, it was found that the content (*e.g.,* amount) of lithium hydroxide and lithium carbonate on the surface of NCA particles decreased after Al$_2$O$_3$@Gr and LiF (LiPF$_6$) coating, while the Li 1s peak shifted to a higher binding energy, indicating the formation of Li$_3$N phase, which is responsible for the improved ionic conductivity of NCA cathode material. In addition, an F 1s signal was observed for the composite cathode active material of Example 3 co-coated with Al$_2$O$_3$@Gr and LiPF$_6$, which was attributed to the presence of LiF on the NCA particle surface.

The XPS peaks of carbonate groups are mainly attributed to the residual Li$_2$CO$_3$ remaining on the NCA particle surface after synthesis. Therefore, the amount of residual lithium determined by the titration of LiOH and Li$_2$CO$_3$ was measured to prove that the amount of residual lithium compounds on the NCA particle surface decreased after the composite (GB)-LiPF$_6$ coating (Table 1). The content (*e.g.,* amount) of residual lithium compounds in Table 1 was evaluated according to the following method.

**Content of residual lithium**

The sample was titrated with a 1N concentration of HCl solution to determine the amount of lithium in the solution.

The amount of lithium in the solution was measured utilizing an automatic calibrator, and the first inflection point (EP1) where the pH changes rapidly from pH 7 to pH 9 and the end point (FP) where the pH reaches 5 were measured, and the content (*e.g.,* amount) of Li$_2$CO$_3$ and the content (*e.g.,* amount) of LiOH were calculated by the following Equation 1 and Equation 2.

Equation 1

$$\text{Content of Li}_2\text{CO}_3 \, (\%): (FP\text{-}EP1) \times 0.1 \times 0.001 \times (\text{MW of Li}_2\text{CO}_3 \, (73.89)/5) \times 100$$

Equation 2

$$\text{Content of LiOH} \, (\%): (2 \times EP1\text{-}FP) \times 0.1 \times 0.001 \times (\text{MW of LiOH} \, (23.94)/5) \times 100$$

The content (*e.g.,* amount) of lithium remaining on the final surface was measured by adding the calculated content (*e.g.,* amount) of Li$_2$CO$_3$ and the content (*e.g.,* amount) of LiOH, and the content (*e.g.,* amount) of lithium remaining on the surface was converted to a weight percentage of the total weight of the cathode active material, and the results are shown in Table 1.

Table 1

| Signal | Component | Comparative Example 5 (Bare) | Comparative Example 1 (GB) | Example 3 (GB/LiPF$_6$) |
|--------|-----------|:---:|:---:|:---:|
| | | Atomic % | | |
| Li 1s | LiOH | 16.7 | 33.7 | 16.3 |
| Li 1s | Li$_2$CO$_3$ | 57.7 | 39.9 | 17.3 |

(continued)

| Signal | Component | Comparative Example 5 (Bare) | Comparative Example 1 (GB) | Example 3 (GB/LiPF$_6$) |
|--------|-----------|------------------------------|----------------------------|-------------------------|
| | | Atomic % | | |
| Li 1s | LiF | 25.7 | 26.4 | 66.4 |

As shown in Table 1, the composite cathode active material of Example 3 has a significantly reduced residual lithium content (*e.g.,* amount) compared to those of Comparative Example 1 and Comparative Example 5.

**Evaluation Example 3: SEM, HR-TEM, and SEM-EDAX Analysis**

Scanning electron microscopy (SEM), high-resolution transmission electron microscopy (HR-TEM), and EDAX analysis were performed on the composite cathode active material prepared in Example 1 and the bare NCA of Comparative Example 5.

An FEI titan 80-300 from Philips was utilized for SEM-EDAX analysis.

The composite prepared in Preparation Example 1 showed that the $Al_2O_3$ particles and its reduction product, $Al_2O_z$ (0<z<3) particles, had a structure embedded in graphene. It was confirmed that the graphene layer was arranged on the periphery of one or more particles selected from the $Al_2O_3$ particles and/or $Al_2O_z$ (0<z<3). One or more particles selected from the $Al_2O_3$ particles and/or $Al_2O_z$ (0<z<3) were uniformly (*e.g.,* substantially uniformly) dispersed within the graphene matrix. The average particle diameter of one or more of the $Al_2O_3$ particles and $Al_2O_z$ (0<z<3) particles was about 20 nm. The average particle diameter of the composite fabricated in Preparation Example 1 was about 100 nm to 200 nm. The composite cathode active material prepared in Example 1 also exhibited a structure and average particle diameter similar to the composite prepared in Preparation Example 1.

In the composite cathode active material prepared in Example 1, it was confirmed that a shell formed by a composite including LiF and graphene was disposed on the NCA core.

SEM-EDAX analysis was performed on the bare NCA of Comparative Example 5 and the composite cathode active material prepared in Example 1.

It was confirmed that the concentration of aluminum (Al) distributed on the surface of the composite cathode active material of Example 1 increased compared to the surface of the bare NCA composite cathode active material of Comparative Example 5.

Therefore, it was confirmed that the composite prepared in Preparation Example 1 was uniformly (*e.g.,* substantially uniformly) coated on the NCA core in the composite cathode active material of Example 1 to form a shell.

**Evaluation Example 4: Evaluation of charge and discharge characteristics at room temperature (25°C)**

The lithium batteries prepared in Example 4 to Example 6, Comparative Example 6, and Comparative Example 8 to Comparative Example 10 were charged at a constant current rate of 0.1 C at 25 °C until the voltage reached 4.4 V (vs. Li), and then cut-off at a current rate of 0.05 C while maintaining 4.4 V in constant voltage mode. The battery was then discharged at a constant current rate of 0.1 C until the voltage reached 2.8 V (vs. Li) during discharge (formation cycle).

The lithium batteries that had undergone the formation cycle were charged at a constant current rate of 0.2 C at 25 °C until the voltage reached 4.4 V (vs. Li), and then cut-off at a current rate of 0.05 C while maintaining 4.4 V in constant voltage mode. The battery was then discharged at a constant current rate of 0.2 C until the voltage reached 2.8 V (vs. Li) during discharge (1st cycle). Such cycle was repeated with the same conditions until the 50th cycle (50 iterations).

In all charge/discharge cycles, a 10 minute stop time was set after one charge/discharge cycle. Some of the results of the room temperature charge and discharge experiments are shown in Table 2. Table 2 shows the initial specific capacity and initial efficiency characteristics of the lithium batteries prepared in Example 4 to Example 6, Comparative Example 6, and Comparative Example 8 to Comparative Example 10. Here, the initial efficiency is defined by Equation 3.

Equation 3

$$\text{Initial efficiency [\%]} = [\text{discharge capacity at formation cycle/charge capacity at formation cycle}] \times 100$$

**Evaluation Example 5: Evaluation of high temperature (45 °C) charge and discharge characteristics**

The lithium batteries prepared in Example 4 to Example 6, Comparative Example 6, and Comparative Example 8 to Comparative Example 10 were charged at a constant current rate of 0.1 C at 45 °C until the voltage reached 4.4 V (vs. Li), and then cut-off at a current rate of 0.05 C while maintaining 4.4 V in constant voltage mode. The battery was then discharged at a constant current rate of 0.1 C until the voltage reached 2.8 V (vs. Li) during discharge (formation cycle).

The lithium batteries that had undergone the formation cycle were charged at a constant current rate of 0.2 C at 45 °C until the voltage reached 4.4 V (vs. Li), and then cut-off at a current rate of 0.05 C while maintaining 4.4 V in constant voltage mode. The battery was then discharged at a constant current rate of 0.2 C until the voltage reached 2.8 V (vs. Li) during discharge (1st cycle). Such cycle was repeated with the same conditions until the 50th cycle (50 iterations).

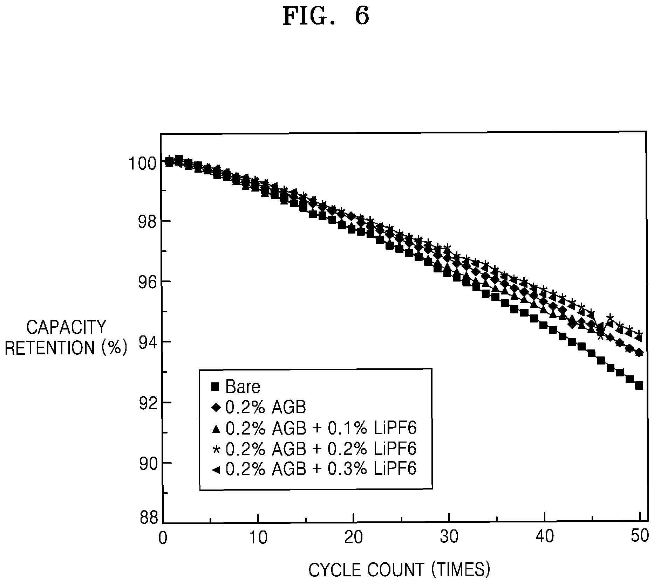

In all charge/discharge cycles, a 10 minute stop time was set after one charge/discharge cycle. Some of the results of the high temperature charge and discharge experiments are shown in Table 2 and FIG. 6. FIG. 6 shows a capacity retention characteristic of each of the lithium cells prepared in Example 4 to Example 6, Comparative Example 6, and Comparative Example 10. In FIG. 6, Example 4 is for 0.2% AGB +0.1 % $LiF_6$, Example 5 is for 0.2% AGB +0.2% $LiF_6$, and Example 6 is for 0.2% AGB +0.3% $LiF_6$. Comparative Example 6 is for 0.2% AGB and Comparative Example 10 is for Bare.

The capacity retention rate is defined by Equation 4.

Equation 4

$$\text{Capacity Retention [\%]} = [\text{Discharge capacity at 50}^{th}\text{ cycle/Discharge at 1}^{st}\text{ cycle}] \times 100$$

**Evaluation Example 6: Resistance**

The internal resistance was measured by preparing five of each lithium battery, then charging and discharging the batteries at 1/3 C for 10 seconds, and measuring the internal resistance at SOC50 %. In this case, SOC50 % means that the batteries are charged to 50 % charge capacity if (*e.g.,* when) the total charge capacity of the battery is 100 %. Some of the results are shown in Table 2.

Table 2

| Category | Sample name | Initial specific capacity @ 25 °C | | | Specific capacity @ 45 °C | Initial Resistivity | Capacity retention @ 45 °C (after 50 cycles) | | Resistance |
|---|---|---|---|---|---|---|---|---|---|
| | | 0.2 C Charg e (mAh/ g) | 0.2 C Discharg e (mAh/g) | Efficiency (%) | 0.2 C Discharge (mAh/g) | DCIR SOC=50 % (Ohm) | Discharge capacity (mAh/g) | Retention (%) | DCIR SOC=50 % (Ohm) |
| Example 4 | 0.2 wt% AGB, 0.1 wt% LiPF$_6$ | 237.3 | 209.3 | 88.2 | 231.3 | 4.6 | 206.8 | 93.7 | 9.5 |
| Example 5 | 0.2 wt% AGB, 0.2 wt% LiPF$_6$ | 237.6 | 209.9 | 88.4 | 231.7 | 4.7 | 208.1 | 94.1 | 8.8 |
| Example 6 | 0.2 wt% AGB, 0.3 wt% LiPF$_6$ | 238.5 | 210.6 | 88.3 | 232.6 | 4.5 | 209.0 | 94.1 | 8.2 |
| Comparative Example 6 | 0.2 wt% AGB | 238.8 | 210.7 | 88.3 | 232.7 | 4.3 | 207.8 | 93.6 | 8.5 |
| Comparative Example 8 | Blend of NCA coated with Al$_2$O$_3$@Gr composite and NCA coated with LiF | - | - | 87 | 214 | - | - | 87 | 9 |
| Comparative Example 9 | Al$_2$O$_3$-GB and LiBr coated NCA | - | - | 87 | 215.1 | - | - | 86.2 | - |
| Comparative Example 10 | Bare NCA | 238.2 | 210.1 | 88.2 | 231.7 | 4.9 | 203.8 | 92.1 | 9.4 |

As shown in Table 2, it was found that the lithium batteries of Example 4 to Example 6 each have improved initial efficiency, specific capacity, and capacity retention compared to the lithium batteries of Comparative Example 6 and Comparative Example 10, with reduced internal resistance. From this, it may be seen that the encapsulation of $LiPF_6$ into a shell helps to increase the initial cycle discharge rate and Coulombic efficiency, and as shown in Table 2 and FIG. 6, the capacity retention rate after 50 cycles at 45 °C is improved and the DCIR after 50 cycles is reduced.

The lithium battery prepared according to Comparative Example 8 exhibited reduced capacity and lifetime characteristics compared to the lithium battery prepared in Example 6. And the lithium battery prepared according to Comparative Example 9 exhibited reduced capacity and lifetime characteristics compared to the lithium battery of Example 5 due to reduced electronic conductivity, as shown in Table 2.

According to aspects of one or more embodiments of the present disclosure, a composite cathode active material having a shell including a conductive carbon-based composite containing a first metal oxide and a carbonaceous material, and a lithium fluoride-based compound improves electronic conductivity and ionic conductivity, thereby improving high rate characteristics and capacity retention of a lithium battery.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

**Claims**

1.  A composite cathode active material comprising:

    a core comprising a lithium transition metal oxide; and
    a shell on a surface of the core,
    wherein the shell comprises:

      a conductive carbon-based composite comprising:

        a first metal oxide represented by formula $M_aO_b$ ($0<a\leq3$, $0<b<4$, wherein a is 1, 2, or 3, and b is not an integer), and
        a carbonaceous material, and

      a lithium fluoride-based compound,

    wherein the first metal oxide is within a matrix of the carbonaceous material, and
    wherein M is one or more metals selected from among, Group 2 to Group 13, Group 15, and Group 16, of the Periodic Table.

2.  The composite cathode active material of claim 1, wherein an amount of the lithium fluoride-based compound in the shell is 3 wt% or less based on 100 wt% of the composite cathode active material and/or
    an amount of a first metal in the shell is 1 at% to 10 at% with respect to a total number of atoms in the shell, an amount of oxygen in the shell is 1 at% to 20 at% with respect to the total number of atoms in the shell, an amount of nitrogen in the shell is 1 at% to 12 at% with respect to the total number of atoms in the shell, and an amount of boron in the shell is greater than 0 at% and at most 5 at% relative to the total number of atoms in the shell.

3.  The composite cathode active material of claim 1 or 2, wherein the lithium fluoride-based compound in the shell comprises LiF, $LiPF_6$, $Li_xPF_yO_z$ ($1\leq x<3$, $0<y\leq2$, $2\leq z<4$), or a combination thereof.

4.  The composite cathode active material of any of the claims 1 to 3,
    wherein an amount of carbon in the shell is 65 at% to 99 at% relative to a total number of atoms in the shell.

5.  The composite cathode active material of any of the claims 1 to 4,
    wherein a metal in the first metal oxide is one or more selected from among Al, Nb, Mg, Sc, Ti, Zr, V, W, Mn, Fe, Co, Pd, Cu, Ag, Zn, Sb, and Se.

6.  The composite cathode active material of any of the claims 1 to 5,
    wherein the first metal oxide is one or more selected from among $Al_2O_z$ ($0<z<3$), $NbO_x$ ($0<x<2.5$), $MgO_x$($0<x<1$), $Sc_2O_z$($0<z<3$), $TiO_y$($0<y<2$), $ZrO_y$($0<y<2$), $V_2O_z$($0<z<3$), $WO_y$($0<y<2$), $MnO_y$($0<y<2$), $Fe_2O_z$($0<z<3$), $Co_3O_w$($0<w<4$), $PdO_x$($0<x<1$), $CuO_x$ ($0<x<1$), $AgO_x$ ($0<x<1$), $ZnO_x$ ($0<x<1$), $Sb_2O_z$ ($0<z<3$), and $SeO_y$ ($0<y<2$).

7.  The composite cathode active material of any of the claims 1 to 6,
    wherein the shell has a thickness of about 1 nm to about 5 $\mu$m.

8.  The composite cathode active material of any of the claims 1 to 7, wherein the carbonaceous material is graphene and/or

      the carbonaceous material has a branched structure,
      wherein the first metal oxide is distributed within the branched structure, and
      wherein the branched structure comprises a plurality of particles of the carbonaceous material in contact with each other.

9.  The composite cathode active material of any of the claims 1 to 8, wherein the shell comprises the lithium fluoride-based compound or a milling product of the conductive carbon-based composite and the lithium fluoride-based compound,
    wherein an amount of the conductive carbon-based composite and the lithium fluoride-based compound or the milling product of the conductive carbon-based composite and the lithium fluoride-based compound is 3 wt% or less by weight with respect to a total weight of the composite cathode active material.

10. The composite cathode active material of any of the claims 1 to 9, wherein the carbonaceous material has one or more structures selected from among one or more spherical structures, a spiral structure in which the spherical structures are connected, and a cluster structure in which the spherical structures are aggregated,

wherein the first metal oxide is distributed within the spherical structure and the spherical structure has a size of about 50 nm to about 300 nm,
wherein the spiral structure has a size of about 500 nm to about 100 $\mu$m,
wherein the cluster structure has a size of about 0.5 mm to about 10 cm,
wherein the conductive carbon-based composite has structure comprising a crumpled faceted-ball structure or a planar structure, and wherein one or more selected from among the first metal oxide and a second metal oxide is distributed within or on a surface of the structure,
wherein the carbonaceous material extends a distance of 10 nm or less from the first metal oxide and comprises at least 1 to 20 layers of the carbonaceous material, and
wherein the carbonaceous material has a total thickness of about 0.6 nm to about 12 nm.

11. The composite cathode active material of any of the claims 1 to 10, wherein the lithium transition metal oxide is represented by Formula 1 to Formula 5:

$$\text{Formula 1} \qquad Li_aNi_xCo_yM_zO_{2-b}A_b$$

wherein, in Formula 1, $1.0 \leq a \leq 1.2$, $0 \leq b \leq 0.2$, $0.8 \leq x < 1$, $0 < y \leq 0.3$, $0 < z \leq 0.3$, $0 \leq b < 2$, and $x+y+z=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or a combination thereof, and A is F, S, Cl, Br, or a combination thereof,

$$\text{Formula 2} \qquad LiNi_xCo_yMn_zO_2$$

$$\text{Formula 3} \qquad LiNi_xCo_yAl_zO_2$$

wherein, in Formula 2 to Formula 3, $0.8 \leq x \leq 0.95$, $0 < y \leq 0.2$, $0 < z \leq 0.2$, and $x+y+z=1$,

$$\text{Formula 4} \qquad LiNi_xCo_yMn_vAl_wO_2$$

wherein, in Formula 4, $0.8 \leq x \leq 0.95$, $0 < y \leq 0.2$, $0 < v \leq 0.2$, $0 < w \leq 0.2$, and $x+y+v+w=1$,

$$\text{Formula 5} \qquad Li_aCo_xMyO_{2-b}A_b$$

wherein, in Formula 5, $1.0 \leq a \leq 1.2$, $0 \leq b \leq 0.2$, $0.9 \leq x \leq 1$, $0 \leq y \leq 0.1$, and $x+y=1$, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or a combination thereof, and A is F, S, Cl, Br, or a combination thereof.

12. A cathode (3, 3',3") comprising the composite cathode active material according to any of the claims 1 to 11.

13. A lithium battery (1,1',1"), comprising:

the cathode (3, 3',3") of claim 12;
an anode (2, 2',2"); and
an electrolyte between the cathode (3, 3',3") and the anode (2, 2',2").

14. The lithium battery (1,1',1") of claim 13,

wherein the cathode (3, 3',3") comprises a cathode current collector and the anode (2, 2',2") comprises an anode current collector,
wherein at least one of the cathode current collector or anode current collector comprises a base film and a metal layer on at least one side of the base film,

wherein the base film comprises a polymer,

wherein the polymer comprises polyethylene terephthalate (PET), polyethylene (PE), polypropylene (PP), polybutylene terephthalate (PBT), polyimide (PI), or a combination thereof, and

wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. and/ or

wherein the electrolyte comprises a liquid electrolyte, a solid electrolyte, a gel electrolyte or a combination thereof; and/or

wherein the electrolyte comprises the solid electrolyte and/or the gel electrolyte, and

wherein the solid electrolyte is an oxide-based solid electrolyte, a sulfide-based solid electrolyte, a polymer solid electrolyte or a combination thereof, and the gel electrolyte comprises a polymer gel electrolyte.

15. A method of preparing a composite cathode active material, the method comprising: supplying a lithium transition metal oxide;

supplying a composite; and

mechanically milling the lithium transition metal oxide, the composite, and lithium hexafluorophosphate ($LiPF_6$), wherein the composite comprises a first metal oxide represented by formula MaOb ($0<a\leq3$, $0<b<4$, wherein a is 1, 2, or 3, and b is not an integer) and a carbonaceous material,

wherein the first metal oxide is within a matrix of the carbonaceous material, and

wherein M is one or more metals selected from among

Group 2 to Group 13, Group 15, and Group 16,

of the Periodic Table.

preferably comprising the step of

supplying a reaction gas comprising a carbon source gas to a second metal oxide represented by $M_aO_c$ ($0<a\leq3$, $0<c\leq4$, where a is 1, 2, or 3 and c is an integer) and heat treating to prepare an undoped composite; and

contacting the undoped composite with lithium hexafluorophosphate ($LiPF_6$) to prepare the composite,

wherein M of the second metal oxide is one or more metals selected from among,

Group 2 to Group 13, Group 15, and Group 16,

of the Periodic Table.

FIG. 1

# FIG. 2

# FIG. 3

# FIG. 4

# FIG. 5

FIG. 6

# FIG. 7

# FIG. 8

# FIG. 9

1"

4"
2"
4"
3"

7"

8"

5"

Europäisches
Patentamt

European
Patent Office

Office européen
des brevets

# EUROPEAN SEARCH REPORT

Application Number

EP 23 21 2406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/320498 A1 (KAPYLOU ANDREI [KR] ET AL) 6 October 2022 (2022-10-06) * claims 1, 2, 4, 6-8, 10, 12, 15, 16 * ----- | 1-15 | INV. H01M4/131 H01M4/133 H01M4/136 |
| Y | US 11 011 746 B2 (SAMSUNG ELECTRONICS CO LTD [KR]; SAMSUNG SDI CO LTD [KR]) 18 May 2021 (2021-05-18) * claim 1 * ----- | 1-15 | H01M4/36 H01M4/505 H01M4/525 H01M4/58 H01M4/587 |
| A | US 11 075 367 B2 (SAMSUNG SDI CO LTD [KR]) 27 July 2021 (2021-07-27) * claim 1 * ----- | 1-15 | H01M4/62 H01M10/0525 |
| A | US 2021/376314 A1 (SON INHYUK [KR] ET AL) 2 December 2021 (2021-12-02) * claim 1 * ----- | 1-15 | |

TECHNICAL FIELDS
SEARCHED        (IPC)

H01M

The present search report has been drawn up for all claims

| Place of search | Date of completion of the search | Examiner |
|---|---|---|
| Munich | 5 May 2024 | Martín Fernández, A |

EPO FORM 1503 03.82 (P04C01)

## ANNEX TO THE EUROPEAN SEARCH REPORT
## ON EUROPEAN PATENT APPLICATION NO.

EP 23 21 2406

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2024

| Patent document cited in search report | | Publication date | Patent family member(s) | | Publication date |
|---|---|---|---|---|---|
| US 2022320498 | A1 | 06-10-2022 | CN | 115207300 A | 18-10-2022 |
| | | | EP | 4068421 A1 | 05-10-2022 |
| | | | JP | 2022159208 A | 17-10-2022 |
| | | | KR | 20220136752 A | 11-10-2022 |
| | | | US | 2022320498 A1 | 06-10-2022 |
| US 11011746 | B2 | 18-05-2021 | CN | 106356507 A | 25-01-2017 |
| | | | EP | 3118916 A1 | 18-01-2017 |
| | | | US | 2017018767 A1 | 19-01-2017 |
| US 11075367 | B2 | 27-07-2021 | KR | 20180062237 A | 08-06-2018 |
| | | | US | 2018151865 A1 | 31-05-2018 |
| | | | US | 2020058925 A1 | 20-02-2020 |
| US 2021376314 | A1 | 02-12-2021 | CN | 113764665 A | 07-12-2021 |
| | | | EP | 3923380 A1 | 15-12-2021 |
| | | | JP | 7348231 B2 | 20-09-2023 |
| | | | JP | 2021190431 A | 13-12-2021 |
| | | | KR | 20210148741 A | 08-12-2021 |
| | | | US | 2021376314 A1 | 02-12-2021 |

EPO FORM P0459

For more details about this annex : see Official Journal of the European Patent Office, No. 12/82

**EP 4 391 106 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220178527